(19) **Europäisches Patentamt**
**European Patent Office**
**Office européen des brevets**

(11) **EP 1 770 634 A1**

(12) **EUROPEAN PATENT APPLICATION**
published in accordance with Art. 158(3) EPC

(43) Date of publication:
04.04.2007 Bulletin 2007/14

(51) Int Cl.:
**G06T 1/00** (2006.01)

(21) Application number: **05741274.4**

(22) Date of filing: **20.05.2005**

(86) International application number:
**PCT/JP2005/009230**

(87) International publication number:
**WO 2005/114568 (01.12.2005 Gazette 2005/48)**

(84) Designated Contracting States:
**DE NL**

(30) Priority: **24.05.2004 JP 2004154006**

(71) Applicant: **National University Corporation Hokkaido University**
**Sapporo-shi, Hokkaido 060-0808 (JP)**

(72) Inventors:
• **HASEYAMA, Miki**

 **(JP)**
• **KONDO, Keiko**

 **(JP)**

(74) Representative: **Zimmermann, Gerd Heinrich**
**Zimmermann & Partner,**
**P.O. Box 330 920**
**80069 München (DE)**

(54) **IMAGE RECONSTRUCTING METHOD**

(57)     An image reconstructing method for reconstructing an image accurately even if the true support is unknown. An initial image (I) is denoted by ($g_{initial}$) (51300) . A measured support is subjected to an expansion processing (S1400) to generate an image (d) showing the support (D) (S1500). Snakes are applied to the image (d) (S1700), and an extracted object (D') is made a new support (D) (S1800). Using the obtained support (D) and the Fourier amplitude |F| of the original image, an ER algorithm is applied to the ($g_{initial}$) M times to obtain an output image ($g_n$) (S1900) . The obtained ($g_n$) is used as the ($g_{initial}$) and the (d) (S2000, 52100). Steps (S1700 to S2100) are repeated a predetermined times (N times), thus reconstructing the image. The output image ($g_N$) created after N-times repetition is the reconstructed image.

FIG. 28

**Description**

Technical Field

The present invention relates to an image reconstruction method and, more particularly, to adaptive setting of a constraint condition of an image domain to increase accuracy of image reconstruction with a phase retrieval algorithm.

Background Art

Various fields such as an electronic microscope, astronomical observation, and X-ray crystallography require a phase retrieval method. According to the phase retrieval method, a lost phase is retrieved with a Fourier amplitude obtained by observation, thereby reconstructing an image, and various techniques are proposed (non-patent documents 1 to 4) . In general, an algorithm in the phase retrieval method is referred to as a "phase retrieval algorithm."

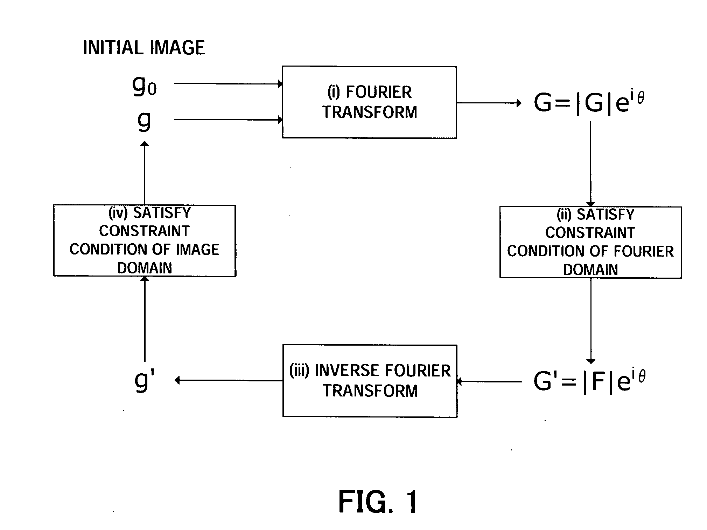

A typical method is the Iterative Fourier method, mainly proposed by Fienup (non-patent document 4). With this technique, Fourier transform and inverse Fourier transform are iteratively used so as to satisfy both the constraint condition of the Fourier domain and the constraint condition of the image domain, thereby reconstructing the image (see FIG. 1). The most basic algorithm in the Iterative Fourier method is an error reduction (ER: Error Reduction) algorithm (non-patent document 4).

As the constraint condition of the Fourier domain corresponding to one of the constraint conditions in the Iterative Fourier method, the Fourier amplitude of a measured original image is used. Further, as another constraint condition of the image domain corresponding to another one of the conditions in the Iterative Fourier method, a nonnegative condition of assuming the original image as a nonnegative real-valued image and a condition of making values 0 outside the domain of the original image (referred to as a "support condition"). A support to be measured is used for the support condition. "Support" here means an area occupied by the original image. Further, the "original image" means an image as an observation target.

Non-patent Document 1: R. W. Gerchberg, "Super-resolution through error energy reduction," Opt. Acta, vol. 21, pp. 709-720, 1974
Non-patent Document 2: B. J. Hoenders, "On the solution of the phase retrieval problem," J. Math. Phys., vol. 16, pp. 1719-1725, 1975
Non-patent Document 3: R. E. Burge, M. A. Fiddy, A. H. Greenaway, and G. Ross, "The phase problem," Proc. R. Soc. Lond, vol. 350, pp. 191-212, 1976
Non-patent Document 4: J. R. Fienup, "Phase retrieval algorithms: a comparison," Appl. Opt., vol. 21, pp. 2758-2769, 1982

Disclosure of Invention

Problems to be Solved by the Invention

However, the conventional Iterative Fourier method has the following problems. That is, as mentioned above, the nonnegative condition and the support condition are used as the constraint conditions of the image domain, and, for the latter support condition, a support to be measured is used. However, the support to be actually measured may be displaced to the left/right, may rotate, and may be influenced by expansion and contraction, and therefore is often measured to be different from the true support. Therefore, as will be described later, in some situations, there is a problem that a reconstructed image is converged to an image other than the original image and becomes stagnant. Herein, the "true support" is the area including the contour and the interior of the original image.

The present invention is made in consideration of the following problems, and it is therefore an object of the present invention to provide an image reconstruction method by which, an image is retrieved with high accuracy according to the phase retrieval algorithm even if a true support is not accurately recognized.

Means for Solving the Problem

The present invention provides, for example, the steps of inputting a Fourier amplitude of an original image; inputting a support occupied by the original image; performing expansion processing on the input support; and reconstructing an image by updating a support condition utilizing a phase retrieval algorithm and an object extracting algorithm comprising a function of contracting the support together, using the input Fourier amplitude and the support subjected to the expansion processing.

Advantageous Effect of the Invention

According to the present invention, it is possible to obtain an image reconstruction method, by which the image can be retrieved with high accuracy according to the phase retrieval algorithm, even if the true support is not accurately recognized.

Brief Description of Drawings

FIG. 1 is a block diagram showing the principle of an Iterative Fourier method;
FIG. 2 is a diagram showing an original image;
FIG. 3 is a diagram showing a Fourier amplitude of the original image in FIG. 2;
FIG. 4 is a diagram showing an initial image;
FIG. 5 is a diagram showing a reconstructed image obtained using the initial image in FIG. 4;
FIG. 6 is a graph showing a change in Fourier errors due to iteration;
FIG. 7A is a diagram showing a case in which a measured support is displaced 30 pixels upward from the true support;
FIG. 7B is a diagram showing a case in which the measured support is displaced 30 pixels downward from the true support;
FIG. 7C is a diagram showing a case in which the measured support is displaced to the left by 30 pixels from the true support;
FIG. 7D is a diagram showing a case in which the measured support is displaced to the right by 30 pixels from the true support;
FIG. 8A is a diagram showing a reconstructed image obtained by an ER algorithm when the measured support is displaced 30 pixels upward from the true support;
FIG. 8B is a diagram showing a transition of an Fourier error in this case;
FIG. 9A is a diagram showing a reconstructed image obtained by the ER algorithm when the measured support is displaced 30 pixels downward from the true support;
FIG. 9B is a diagram showing a transition of an Fourier error in this case;
FIG. 10A is a diagram showing a reconstructed image obtained by the ER algorithm when the measured support is displaced to the left by 30 pixels from the true support;
FIG. 10B is a diagram showing a transition of a Fourier error in this case;
FIG. 11A is a diagram showing a reconstructed image obtained by the ER algorithm when the measured support is displaced to the right by 30 pixels from the true support;
FIG. 11B is a diagram showing a transition of a Fourier error in this case;
FIG. 12A is a diagram showing a case in which the measured support is rotated by 5 degrees from the true support;
FIG. 12B is a diagram showing a case in which the measured support is rotated by 15 degrees from the true support;
FIG. 12C is a diagram showing a case in which the measured support is rotated by 30 degrees from the true support;
FIG. 12D is a diagram showing a case in which the measured support is rotated by 45 degrees from the true support;
FIG. 13A is a diagram showing a reconstructed image obtained by the ER algorithm when the measured support is rotated by 5 degrees from the true support;
FIG. 13B is a diagram showing a transition of a Fourier error in this case;
FIG. 14A is a diagram showing a reconstructed image by the ER algorithm when the measured support is rotated by 15 degrees from the true support;
FIG. 14B is a diagram showing a transition of a Fourier error in this case;
FIG. 15A is a diagram showing a reconstructed image by the ER algorithm when the measured support is rotated by 30 degrees from the true support;
FIG. 15B is a diagram showing a transition of a Fourier error in this case;
FIG. 16A is a diagram showing a reconstructed image by the ER algorithm when the measured support is rotated by 45 degrees from the true support;
FIG. 16B is a diagram showing a transition of a Fourier error in this case;
FIG. 17 is a diagram showing the true support;
FIG. 18A is a diagram showing a case in which the image in FIG. 17 is subjected to expansion processing using a filter window 3x3;
FIG. 18B is a diagram showing a case in which the image in FIG. 17 is subjected to expansion processing using a filter window $7\times7$;
FIG. 19A is a diagram showing a reconstructed image by the ER algorithm in case of the expansion processing is performed using the filter window 3x3;

FIG. 19B is a diagram showing a transition of a Fourier error in this case;

FIG. 20A is a diagram showing the reconstructed image by the ER algorithm when the image is subjected to the expansion processing with the filter window $7 \times 7$;

FIG. 20B is a diagram showing the transition of an Fourier error in this case;

FIG. 21A is a diagram showing a case in which the image in FIG. 17 is subjected to contraction processing using the 3x3 filter window;

FIG. 21B is a diagram showing a case in which the image in FIG. 17 is subjected to the contraction processing using the 7x7 filter window;

FIG. 22A is a diagram showing a reconstructed image by the ER algorithm when the image is subjected to the contraction processing using the 3x3 filter window;

FIG. 22B is a diagram showing a transition of a Fourier error in this case;

FIG. 23A is a diagram showing a reconstructed image by the ER algorithm when the image is subjected to the contraction processing using the 7x7 filter window;

FIG. 23B is a diagram showing a transition of a Fourier error in this case;

FIG. 24 is a diagram showing an image including supports where expansion and contraction coexist;

FIG. 25A is a diagram showing a reconstructed image by the ER algorithm in case of using the support where expansion and contraction coexist;

FIG. 25B is a diagram showing a transition of a Fourier error in this case;

FIG. 26 is a diagram showing a reconstructed image by the ER algorithm when the image is subjected to the expansion processing using a large filter window ($17 \times 17$);

FIG. 27 is a diagram showing an example of setting an initial contour with Snakes;

FIG. 28 is a flowchart showing an algorithm sequence of an image reconstruction method according to a first embodiment of the present invention;

FIG. 29 is a schematic diagram showing an overall configuration for realizing a method according to the first embodiment;

FIG. 30A is a diagram showing a reconstructed image obtained by applying the ER algorithm when the support condition in FIG. 24 is used;

FIG. 30B is a diagram showing a reconstructed image obtained by employing the method of the first embodiment when the support condition in FIG. 24 is used;

FIG. 31A is a diagram showing a square support;

FIG. 31B is a diagram showing a reconstructed image obtained by applying the ER algorithm using the support in FIG. 31A;

FIG. 32A is a diagram showing a reconstructed image obtained by employing the method of the first embodiment when the measured support is influenced by contraction;

FIG. 32B is a diagram showing an output image after 50 times;

FIG. 32C is a diagram showing an output image after 100 times;

FIG. 32D is a diagram showing an output image after 150 times;

FIG. 32E is a diagram showing an output image after 200 times;

FIG. 32F is a diagram showing an output image after 250 times;

FIG. 33A is a diagram showing a reconstructed image obtained by employing the method of the first embodiment when the measured support is influenced by expansion;

FIG. 33B is a diagram showing an output image after 50 times;

FIG. 33C is a diagram showing an output image after 100 times;

FIG. 33D is a diagram showing an output image after 150 times;

FIG. 33E is a diagram showing an output image after 200 times;

FIG. 33F is a diagram showing an output image after 250 times;

FIG. 34A is a diagram showing a reconstructed image obtained by employing the method of the first embodiment when the measured support is influenced by one-degree rotation;

FIG. 34B is a diagram showing an output image after 50 times;

FIG. 34C is a diagram showing an output image after 100 times;

FIG. 34D is a diagram showing an output image after 150 times;

FIG. 34E is a diagram showing an output image after 200 times;

FIG. 34F is a diagram showing an output image after 250 times;

FIG. 35A is a diagram showing an original image;

FIG. 35B is a diagram showing a measured support influenced by the contraction;

FIG. 35C is a diagram showing a reconstructed image obtained by using the support in FIG. 35B and employing a conventional Iterative Fourier method;

FIG. 35D is a diagram showing a reconstructed image obtained with the support in FIG. 35B obtained by employing the method of a second embodiment;

FIG. 36A is a diagram showing an original image;

FIG. 36B is a diagram showing a measured support influenced by a rotation;

FIG. 36C is a diagram showing a reconstructed image obtained by using the support of FIG. 36B and employing the conventional Iterative Fourier method;

FIG. 36D is a diagram showing a reconstructed image obtained by using the support in FIG. 36B and employing the method of the second embodiment;

FIG. 37 is a block diagram showing a general structure of an electronic microscope;

FIG. 38 is a flowchart showing algorithm sequences of an image reconstruction method according to the second embodiment of the present invention;

FIG. 39A is a diagram showing an original image;

FIG. 39B is a diagram showing an initial image;

FIG. 39C is a diagram showing a reconstructed image obtained by employing the conventional Iterative Fourier method to the initial image in FIG. 39B;

FIG. 39D is a diagram showing a reconstructed image obtained by employing the method of the second embodiment to the initial image in FIG. 39B;

FIG. 40 is a flowchart showing an algorithm sequence of an image reconstruction method according to a third embodiment of the present invention;

FIG. 41 is a flowchart showing contents of updating processing of the Fourier amplitude/support in FIG. 40;

FIG. 42 is a diagram showing an example of measured supports in four continuous time frames;

FIG. 43 is a diagram for illustrating a definition of motion information in two continuous time frames, particularly, FIG. 43A is a diagram showing a movement;

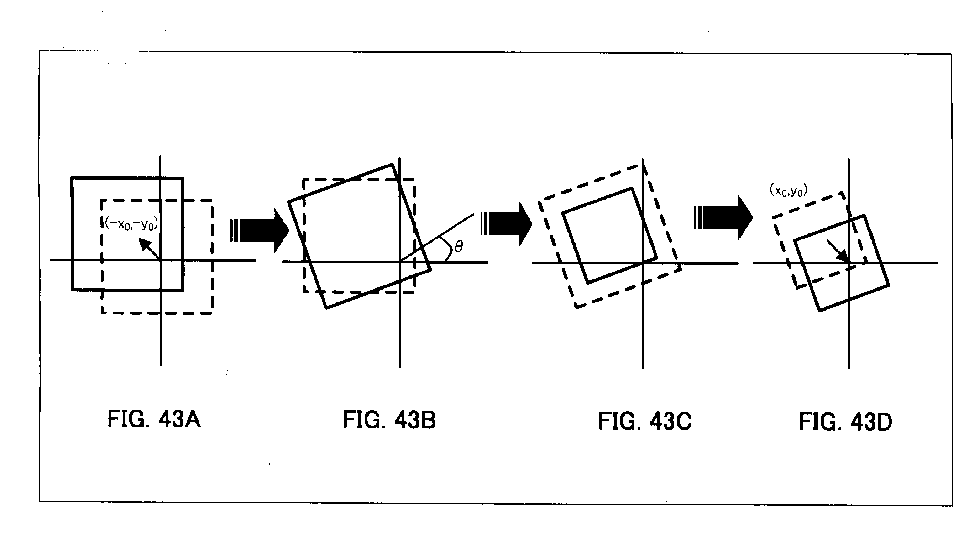

FIG. 43 is a diagram for illustrating a definition of motion information in two continuous time frames, particularly, FIG. 43B is a diagram showing a rotation;

FIG. 43 is a diagram for illustrating a definition of motion information in two continuous time frames, particularly, FIG. 43C is a diagram showing enlargement/reduction;

FIG. 43 is a diagram for illustrating a definition of motion information in two continuous time frames, particularly, FIG. 43D is a diagram showing another movement;

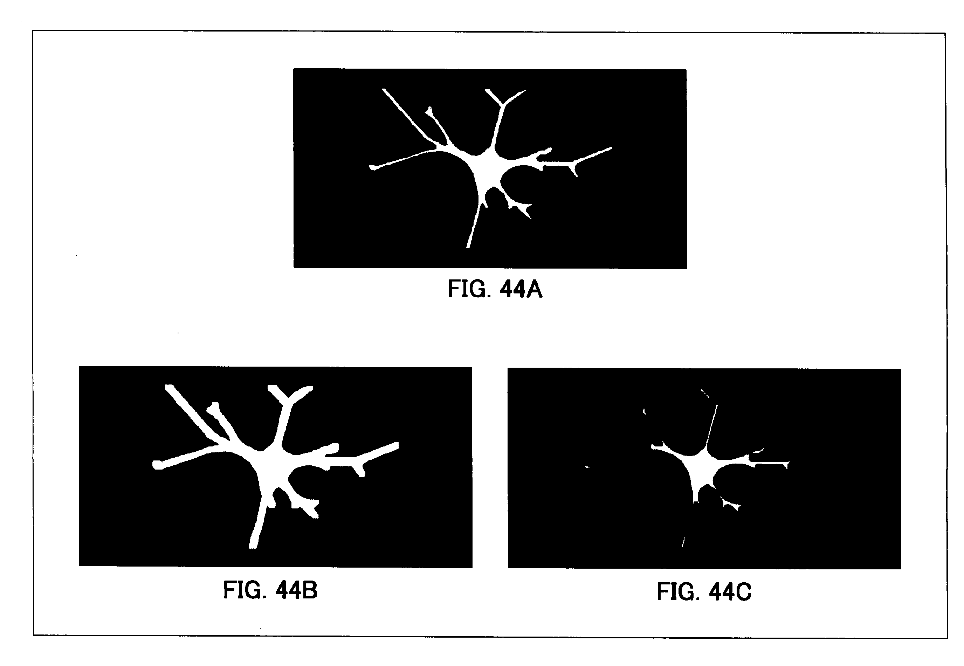

FIG. 44A is a diagram showing the true support;

FIG. 44B is a diagram showing a measured support expanded by +7 pixels from the true support in FIG. 44A;

FIG. 44C is a diagram showing a measured support contracted by -7 pixels from the true support in FIG. 44A;

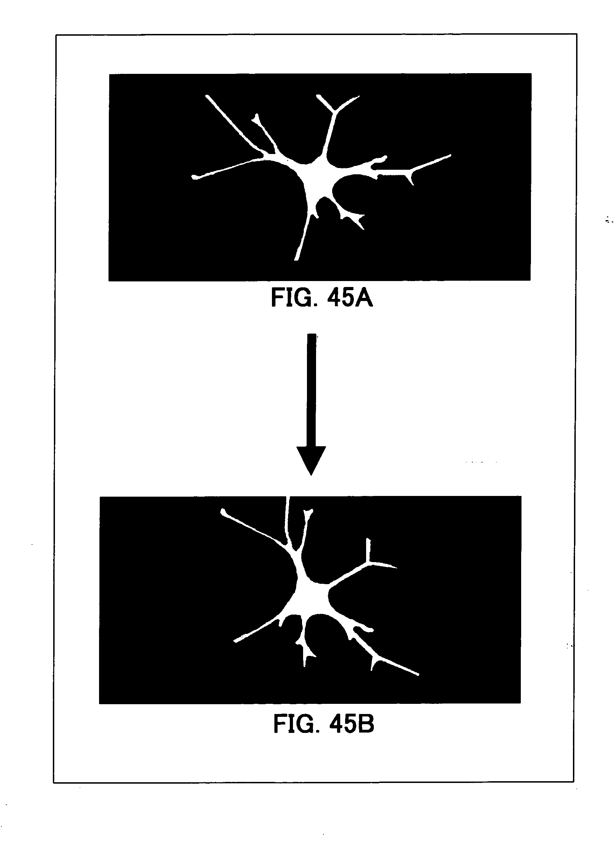

FIG. 45A is a diagram showing a true support;

FIG. 45B is a diagram showing a measured support rotated by 45 degrees from the true support in FIG. 45A;

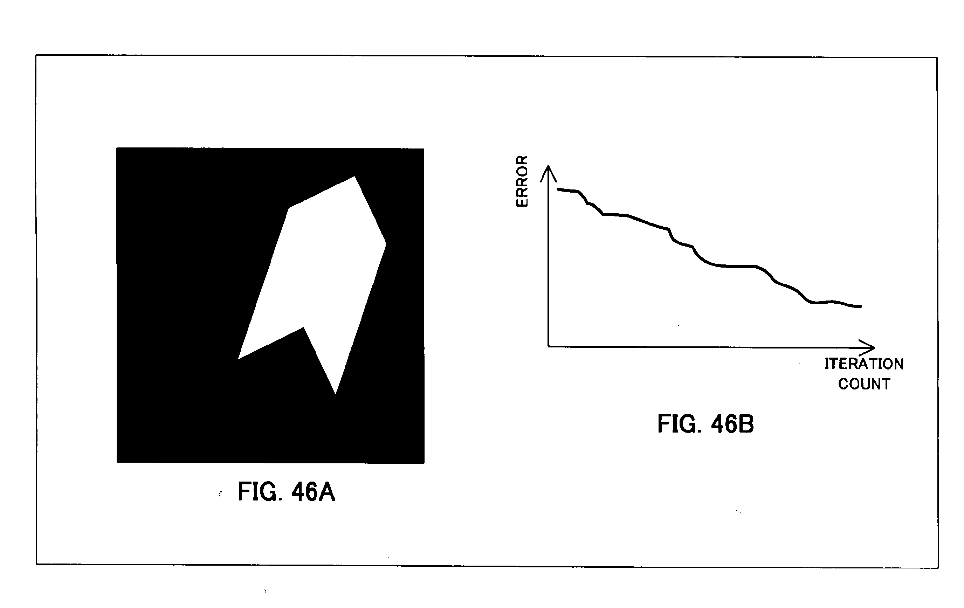

FIG. 46A is a diagram showing, when a function $F^{OPT}$ is not optimum, a support updated by the function $F^{OPT}$;

FIG. 46B is a diagram showing a transition of a Fourier error of the reconstructed image obtained by using the support in FIG. 46A and employing the method of the first embodiment;

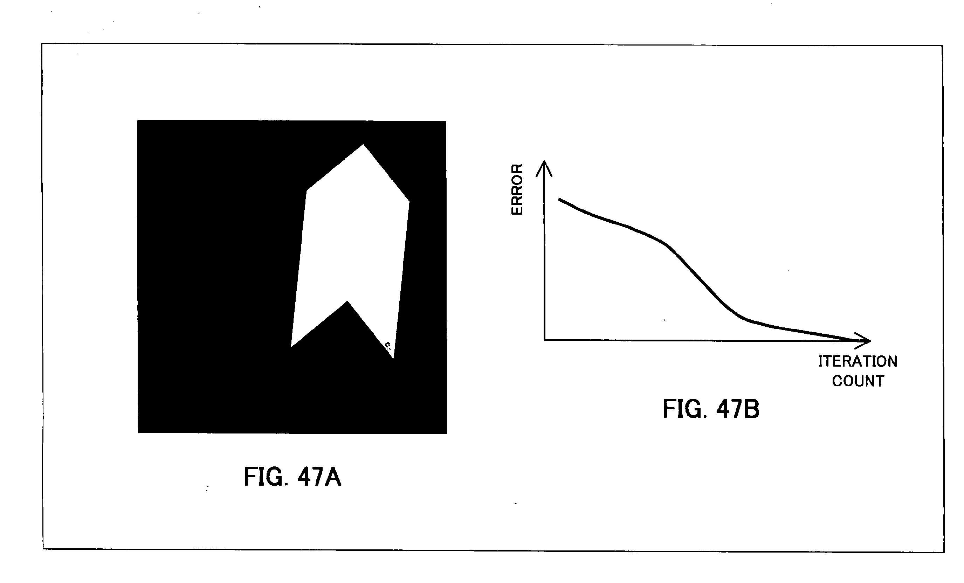

FIG. 47A is a diagram showing a support updated by the selected optimum function $F^{(i)}$ other than the function $F^{OPT}$ among (N+1) functions including the $F^{OPT}$ and functions $F(n)$ (n=1, 2, .., N);

FIG. 47B is a diagram showing a transition of a Fourier error of the reconstructed image obtained by using the support in FIG. 47A and employing the method of the first embodiment;

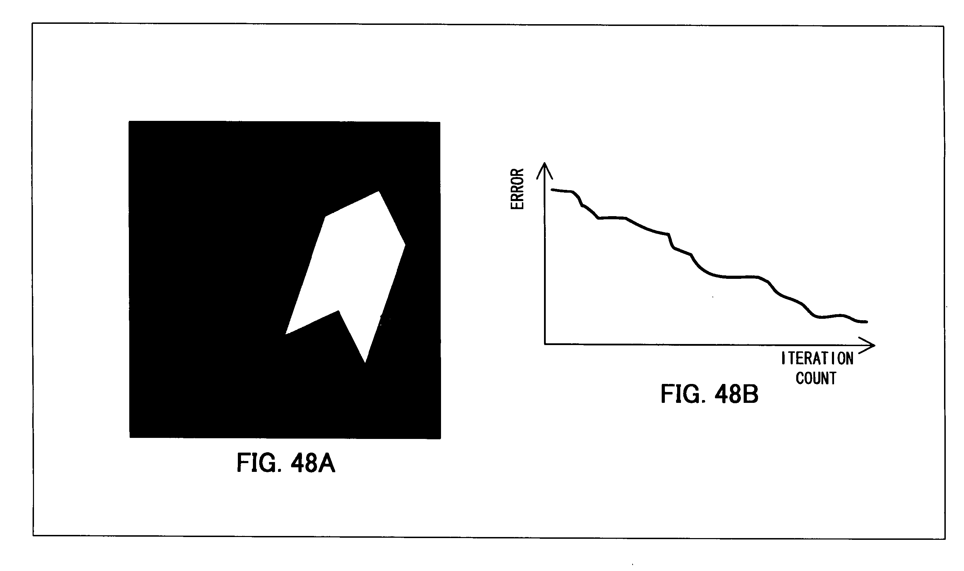

FIG. 48A is a diagram showing a support updated by one function other than the function $F^{opt}$ or the optimum function $F^{(i)}$ among (N+1) functions including the function $F^{OPT}$ and functions $F^{(n)}$ (n=1, 2, .., N);

FIG. 48B is a diagram showing a transition of a Fourier error of the reconstructed image obtained by using the support in FIG. 48A and employing the method of the first embodiment;

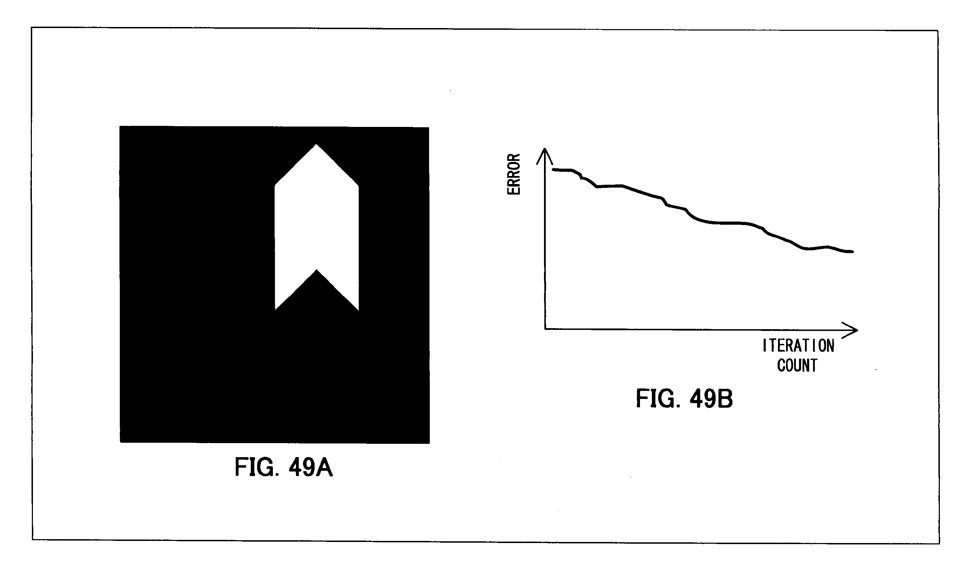

FIG. 49A is a diagram showing a support as a measurement result;

FIG. 49B is a diagram showing a transition of a Fourier error of a reconstructed image obtained by using the support in FIG. 49A and employing the method of the first embodiment;

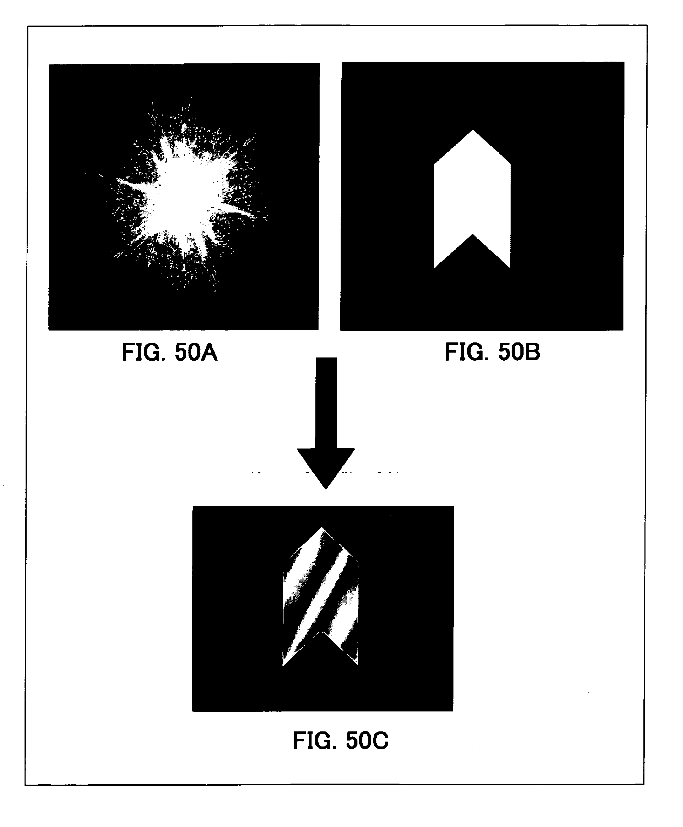

FIG. 50 is a diagram for illustrating processing of a 0-th frame, particularly, FIG. 50A is a diagram showing a Fourier amplitude of the measured 0-th frame;

FIG. 50 is a diagram for illustrating processing of a 0-th frame, particularly, FIG. 50B is a diagram showing a support of the measured 0-th frame;

FIG. 50 is a diagram for illustrating processing of a 0-th frame, particularly, FIG. 50C is a diagram showing a reconstructed image obtained by employing the method of the first embodiment to the Fourier amplitude in FIG. 50A and the support in FIG. 50B;

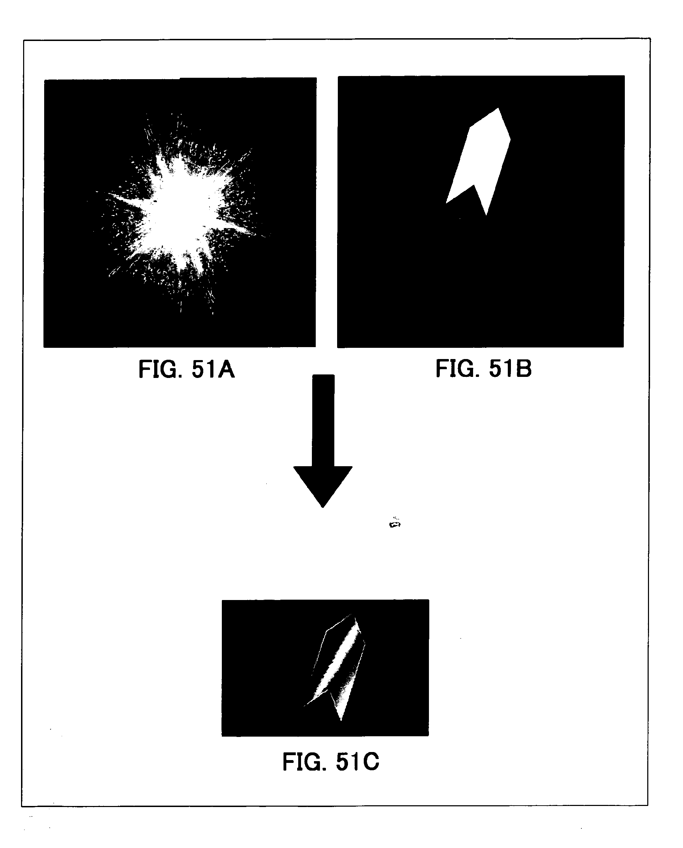

FIG. 51 is a diagram for illustrating processing of a k-th frame, particularly, FIG. 51A is a diagram showing a Fourier amplitude of the measured k-th frame;

FIG. 51 is a diagram for illustrating processing of a k-th frame, particularly, FIG. 51B is a diagram showing a support of the measured k-th frame;

FIG. 51 is a diagram for illustrating processing of a k-th frame, particularly, FIG. 51C is a diagram showing the reconstructed image obtained by employing the method of the third embodiment to the Fourier amplitude in FIG. 51A and the support in FIG. 51B;

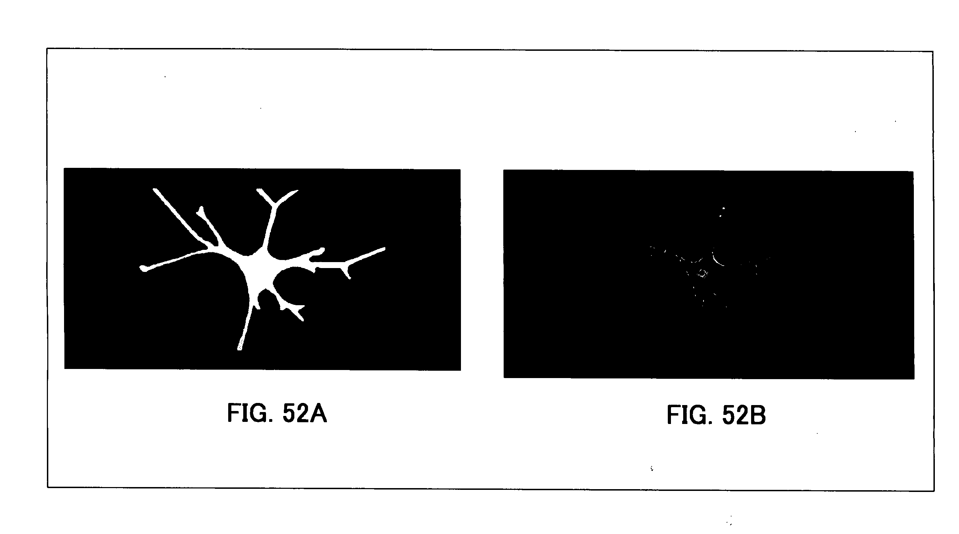

FIG. 52A is a diagram showing an initial support obtained by performing the expansion processing on the measured support in FIG. 44C using a filter window 9×9;

FIG. 52B is a diagram showing a reconstructed image obtained by using the support in FIG. 52A and employing the method of the first embodiment;

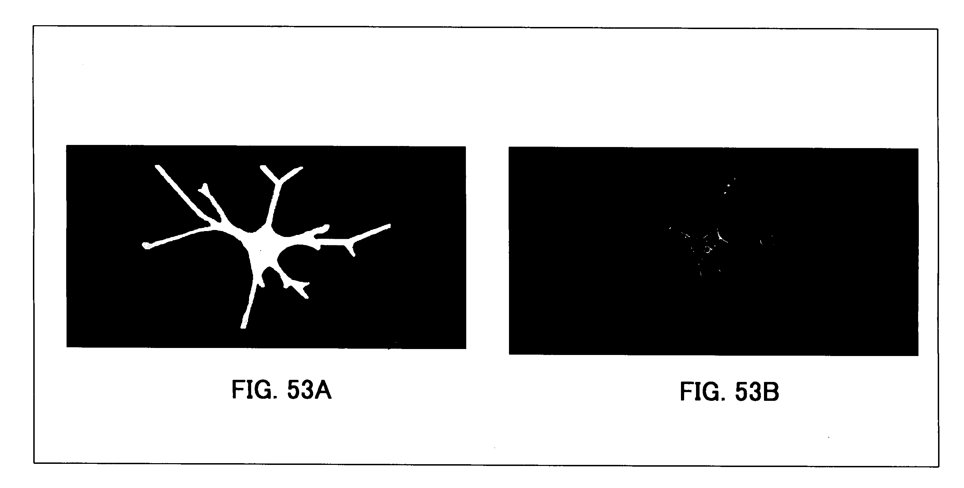

FIG. 53A is a diagram showing an initial support obtained by performing the expansion processing on the measured support in FIG. 44C using a filter window 11×11;

FIG. 53B is a diagram showing a reconstructed image obtained by using the support in FIG. 53A and employing the method of the first embodiment;

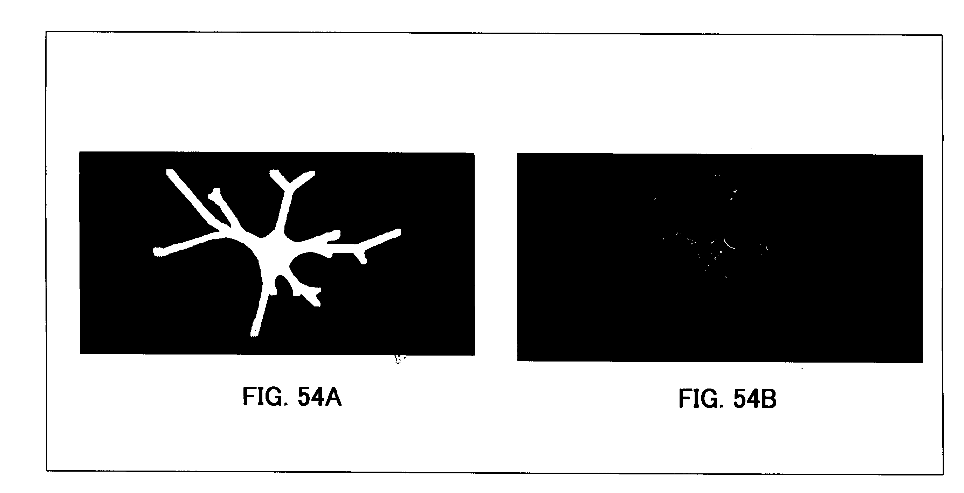

FIG. 54A is a diagram showing an initial support obtained by performing the expansion processing on the measured support in FIG. 44C using a filter window 13×13;

FIG. 54B is a diagram showing a reconstructed image obtained by using the support in FIG. 54A and employing the method of the first embodiment;

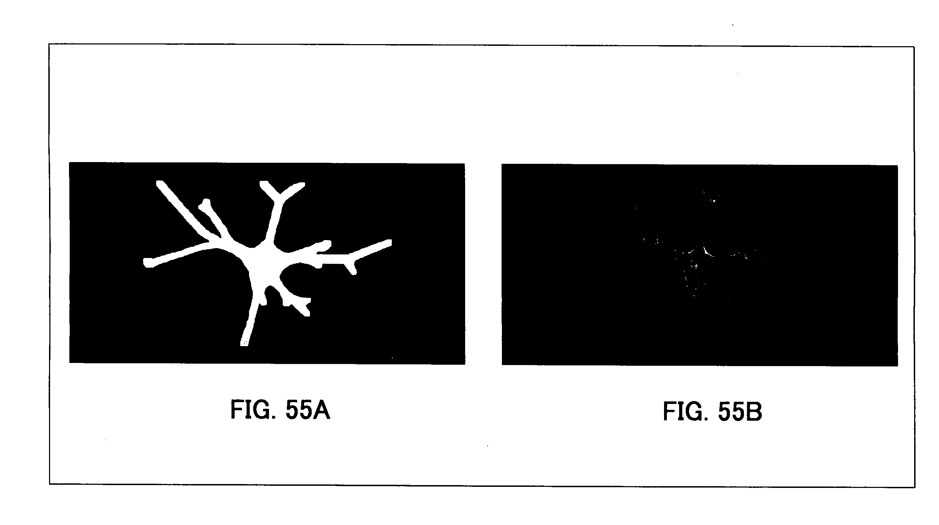

FIG. 55A is a diagram showing an initial support obtained by performing the expansion processing on the measured support in FIG. 44C using a filter window 17x17;

FIG. 55B is a diagram showing a reconstructed image obtained by using the support in FIG. 55A and employing the method of the first embodiment;

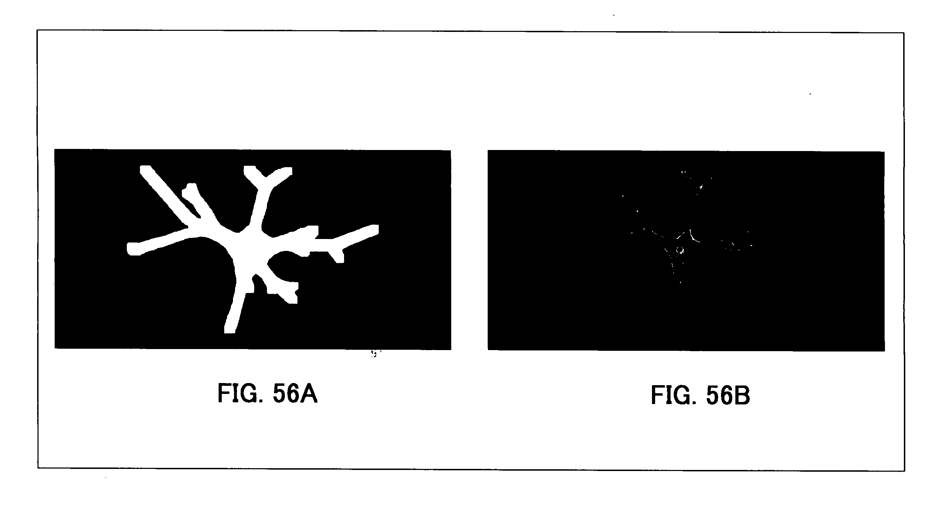

FIG. 56A is a diagram showing an initial support that is obtained by performing the expansion processing on the measured support in FIG. 44C using a filter window 25×25;

FIG. 56B is a diagram showing the reconstructed image obtained by using the support in FIG.56A and employing the method of the first embodiment;

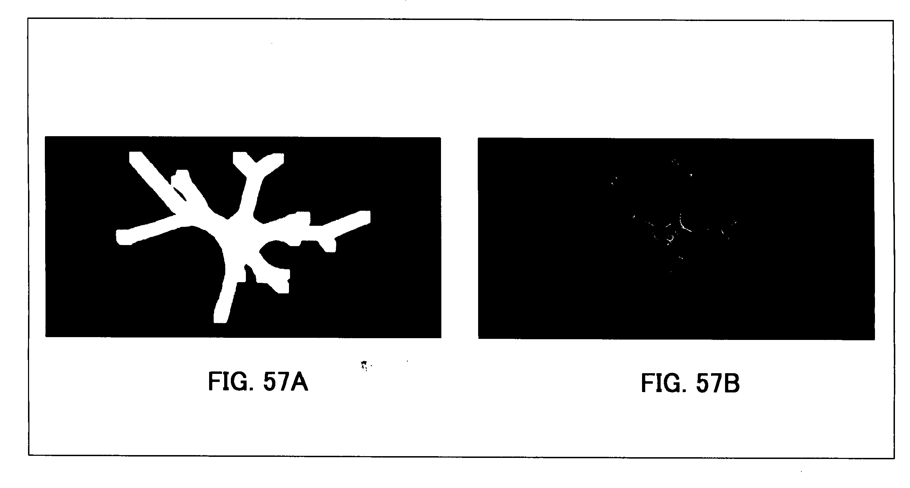

FIG. 57A is a diagram showing an initial support obtained by performing the expansion processing on the measured support in FIG. 44C using a filter window 31×31;

FIG. 57B is a diagram showing the reconstructed image obtained by using the support in FIG.57A and employing the method of the first embodiment;

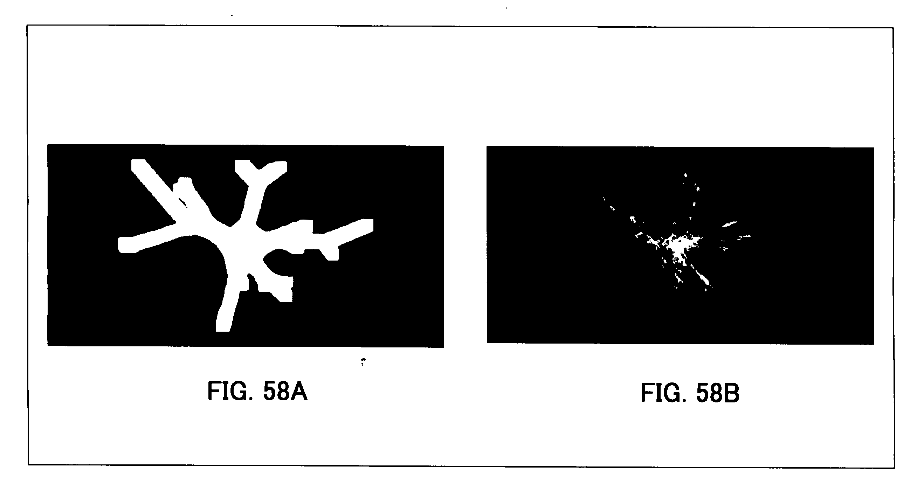

FIG. 58A is a diagram showing an initial support obtained by performing the expansion processing on the measured support in FIG. 44C using a filter window 33x33, and

FIG. 58B is a diagram showing the reconstructed image obtained by using the support in FIG.58A and employing the method of the first embodiment.

Best Mode for Carrying Out the Invention

Embodiments of the present invention will be described below in detail with reference to the accompanying drawings.

(First embodiment)

The present inventors have studied the problems with the Iterative Fourier method, and have found out that a reconstructed image obtained by the ER algorithm is not converged in cases of (1) rotation, (2) contraction, and (3) coexistence of expansion and contraction. Further, even in this case, the present inventors have found that an Iterative Fourier method for realizing image reconstruction with high accuracy needs to be devised. Still further, for that purpose, the present inventors have found that a support condition needs to be updated to be close to a true support.

According to the present invention, the measured support is subjected to expansion processing, and a support condition is updated by using the measured Fourier amplitude and a support subjected to the expansion processing and using an object extraction algorithm (for example, Snakes) having a function of a phase retrieval algorithm (for example, ER algorithm in the Iterative Fourier method) and contracting the support, thereby reconstructing the image.

First, ER algorithm serving as the most basic algorithm in the Iterative Fourier method will be described.

FIG. 1 is a block diagram showing the principle of the Iterative Fourier method. The ER algorithm is an algorithm for converging an image to a solution by iteratively using a constraint condition of a Fourier domain ((ii) in FIG. 1) and a constraint condition of an image domain ((iv) in FIG. 1) through Fourier transform ((i) in FIG. 1) and inverse Fourier transform ((iii) in FIG. 1) . An m-th (m=1, 2, ..) iteration is explained as an example. The processing sequence is expressed as follows.

(i) Fourier transform of an input image

An input image $g_{m-1}(x, y)$ is Fourier transformed and a Fourier coefficient $G_{m-1}(u, v)$ is calculated as the following

(Equation 1).

[Equation 1]

$$G_{m-1}(u,v) = \left| G_{m-1}(u,v) \right| \exp\left[ i\theta_{m-1}(u,v) \right]$$

where $\theta_{m-1}$ is the $(m-1)$-th retrieval phase.

(ii) Application of a constraint condition of Fourier domain
The Fourier amplitude $|G_{m-1}(u, v)|$ calculated by (Equation 1) is replaced with a Fourier amplitude $|F(u, v)|$ of the measured original image. As shown in the following (Equation 2), the Fourier coefficient $G'_{m-1}(u, v)$ is calculated.

[Equation 2]

$$G'_{m-1}(u,v) = \left| F(u,v) \right| \exp\left[ i\theta_{m-1}(u,v) \right]$$

(iii) Generation of an output image by inverse Fourier transform
The Fourier coefficient $G'_{m-1}(u, v)$ calculated by (Equation 2) is inverse Fourier transformed, and an image $g'_{m-1}(x, y)$ is obtained by the following (Equation 3).

[Equation 3]

$$g'_{m-1}(x,y) = \mathfrak{I}^{-1}\left[ G'_{m-1}(u,v) \right]$$

(iv) Application of a constraint condition of an image domain
A constraint condition of an image domain shown by the following (Equation 4) is applied to the image $g'_{m-1}(x, y)$ obtained by (Equation 3), and an m-th input image $g_m(x, y)$ is calculated.

[Equation 4]

$$g_m(x,y) = \begin{cases} g'_{m-1}(x,y) & (x,y) \in D \\ 0 & (x,y) \notin D \end{cases}$$

where D is a collection of sample points where the value of $g'_{m-1}(x, y)$ satisfies the constraint condition of the image domain. As mentioned above, the constraint condition of the image domain includes a nonnegative condition of assuming the original image as a nonnegative real-valued image, and a support condition of making values 0 outside the area of the original image.

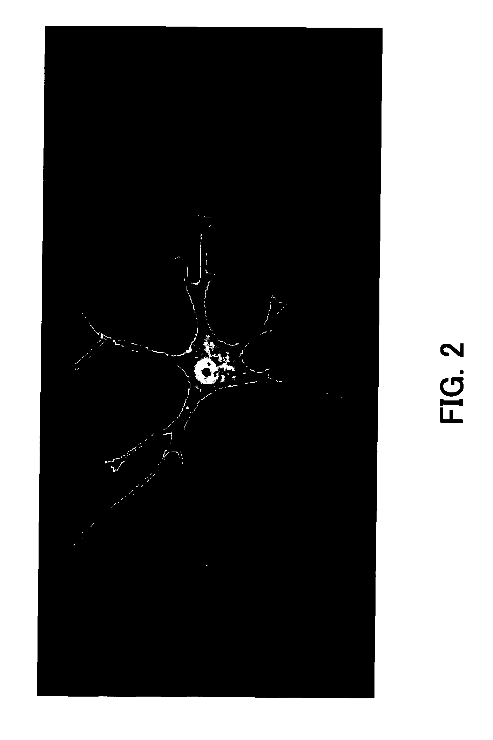

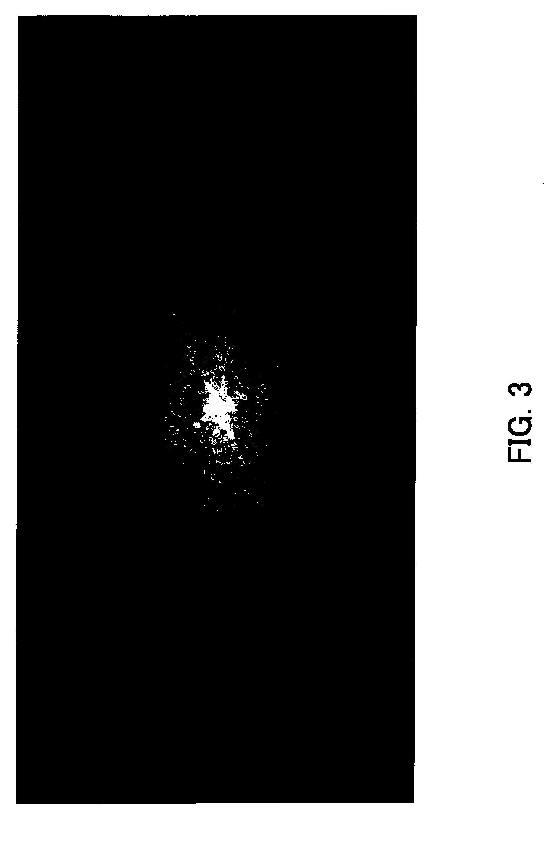

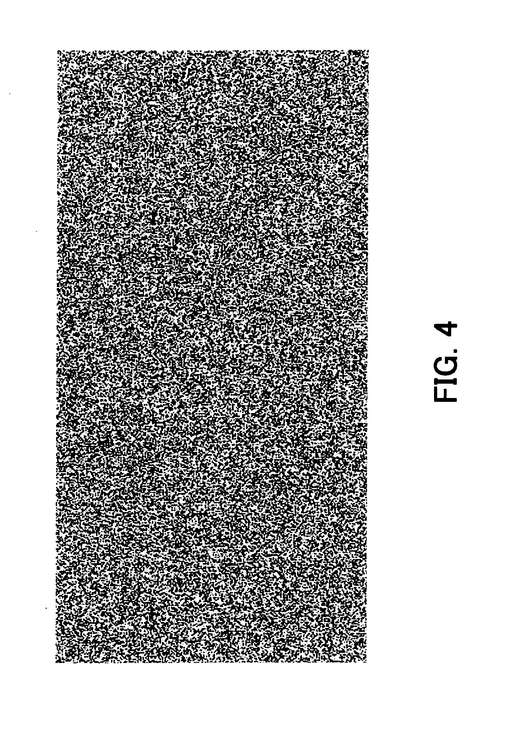

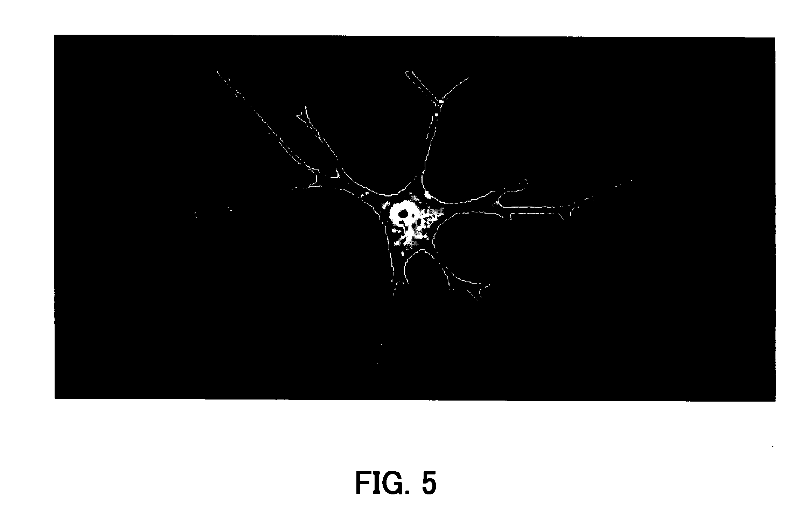

The above-described series of processing is iterated up to a predetermined number of iterations, or, until the error function is equal to or smaller than a predetermined value. Further, an image given a nonnegative random number is generally used as an initial input image go.
Next, the performance of the ER algorithm is shown using an actual image. FIG. 2 is a diagram showing an original image, FIG. 3 is a diagram showing the Fourier amplitude of the original image in FIG. 2, FIG. 4 is a diagram showing an initial image, and FIG. 5 is a diagram showing an image that is reconstructed from the initial image in FIG. 4 by the ER algorithm. The "original image" is an image to be reconstructed as shown in FIG. 2, and the "initial image" is the first-given image having a random number, as shown in FIG. 4.

Herein, as the Fourier amplitude used for the constraint condition of the Fourier domain, the Fourier amplitude (FIG. 3) calculated from the original image (FIG. 2) is used. Further, regarding the support condition as a constraint condition of the image domain, it is assumed that the support is accurately known. As shown in FIG. 4, an image given a nonnegative random value is used as the initial image. FIG. 5 shows the reconstructed image when the ER algorithm is iteratively applied 500 times using this initial image. From FIG. 5, the reconstructed image is a reconstruction of a correct image (original image in FIG. 2).

Further, in order to evaluate the reconstructed image in terms of numeric, the following (Equation 5) is used. Here, $E_{F_m}$ is Fourier error.

[Equation 5]

$$E_{F_m} = \sqrt{\frac{\sum_{u,v}\left\{\left|G_m(u,v)\right| - \left|F(u,v)\right|\right\}^2}{\sum_{u,v}\left|F(u,v)\right|^2}}$$

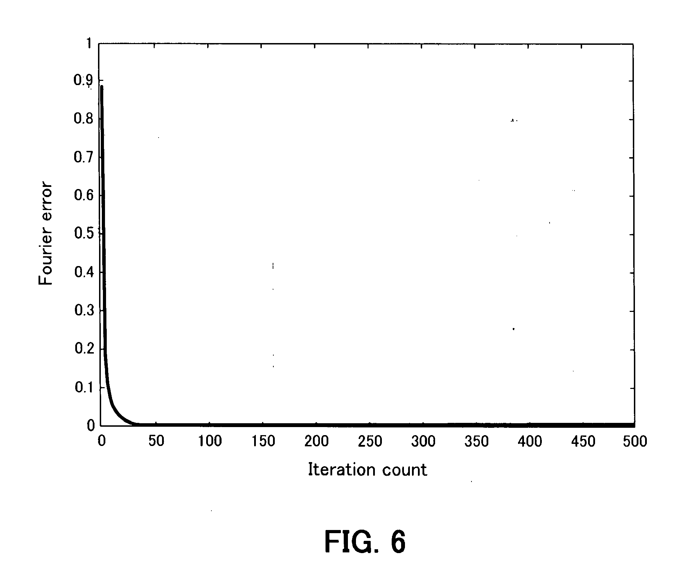

FIG. 6 shows change in Fourier error. From FIG. 6, the reconstructed image converges to the correct image (original image) with a small number of iterations.

For this reason, in the Iterative Fourier method, it is understood that the reconstructed image can accurately converge to the original image if the correct constraint condition of the Fourier domain and constraint condition of the image domain are used.

Thus, the Iterative Fourier method is a technique for converging to an image that satisfies both the constraint condition of the Fourier domain and the constraint condition of the image domain, and, as for the constraint condition of the image domain, in general, it is assumed that a support is accurately known. However, a support to be actually measured may be displaced to the left or right, may rotate, or may be influenced by expansion and contraction, and therefore is often measured to be displaced from the true support. Therefore, in some cases, the problem arises that the reconstructed image converges to an image other than the original image.

The present inventors have studied the following to clarify the above points. That is, the influence on the ER algorithm when a support is measured to be displaced from the true support will be described here using an actual image. Herein, the following three cases will be considered as cases in which the measured support is displaced from the true support.

(Case 1) The measured support is displaced upward or downward or to the left or right, from the true support.
(Case 2) The measured support is rotated from the true support.
(Case 3) The measured support is expanded/contracted compared to the true support.

However, in the constraint condition of the Fourier domain, the amplitude of the original image is used as a measured amplitude. Further, it is assumed that the ER algorithm is iterated 500 times.

(Case 1)

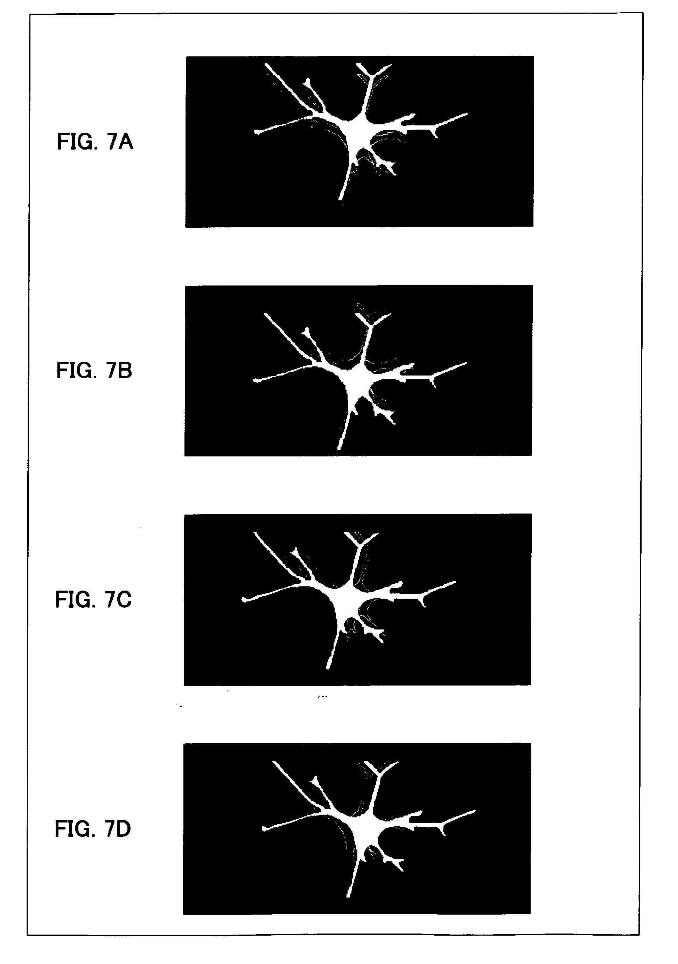

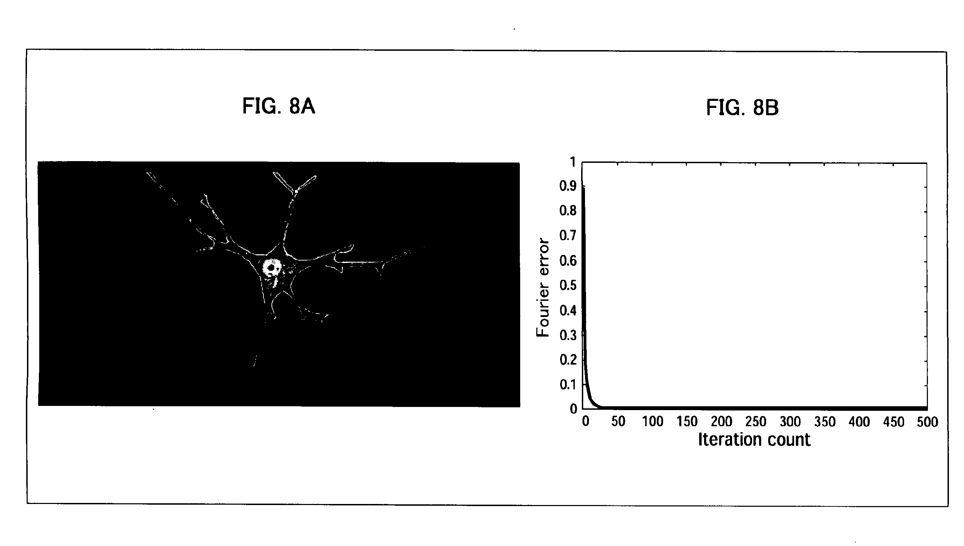

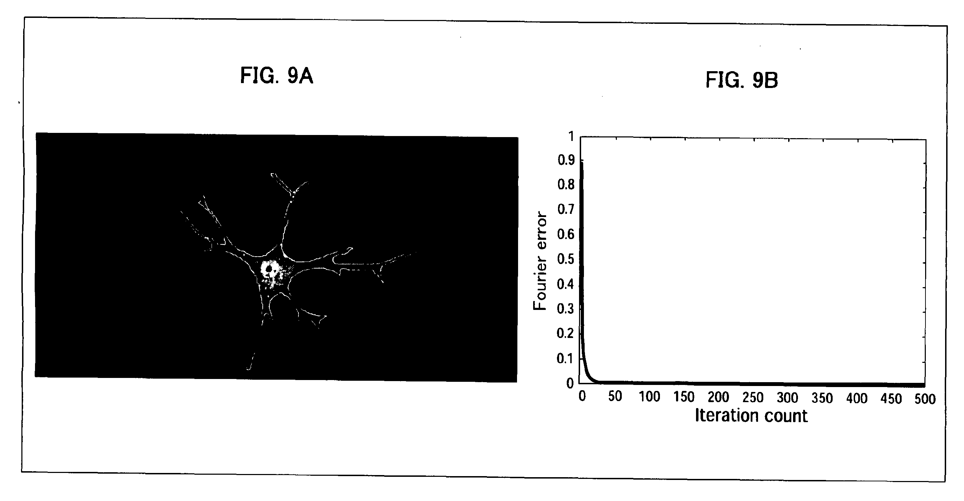

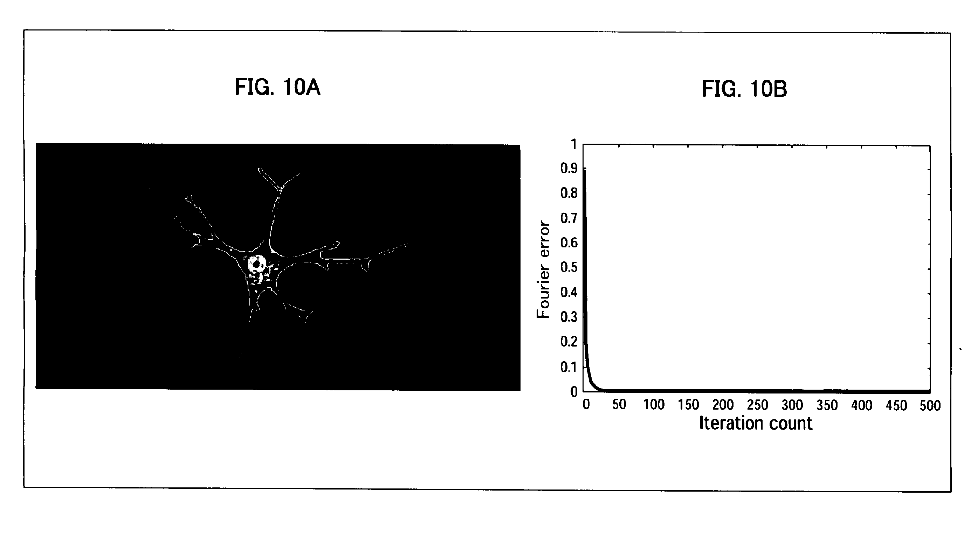

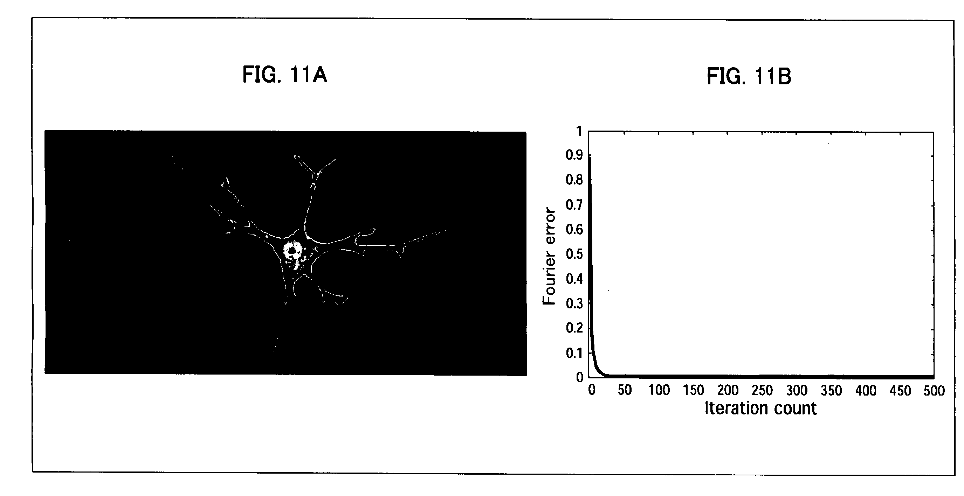

Herein, as shown in FIG. 7, an example will be considered below where the measured support (white) is displaced upward or downward or displaced to the left or right, compared to the true support (gray). FIG. 8A, 8B to 11A, B show the reconstructed image and transition of Fourier error obtained when applying the ER algorithm using this support condition. Herein, the maximum value of displacement in the actual measurement is assumed to be 30 pixels, and support is used here displaced 30 pixels upward or downward or to the left or right. That is, FIG. 7A and 8 show a case of upward displacement by 30 pixels, FIG. 7B and 9 show a case of downward displacement by 30 pixels, FIG. 7C and 10 show a case of displacement to the left by 30 pixels, and FIG. 7D and 11 show a case of displacement to the right by 30 pixels.

From FIG. 8A, 8B to 11A, 11B, even if a support that has a measurement result indicating a upward or downward displacement or displacement to the left or right is used, it is understood that the reconstructed image converges to the correct image (FIG. 2).

(Case 2)

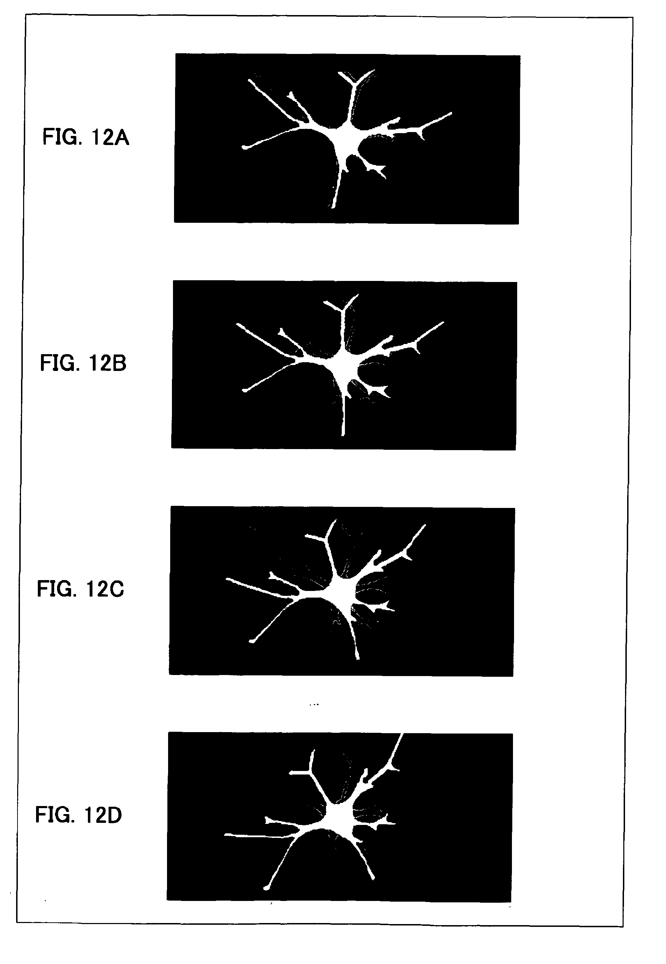

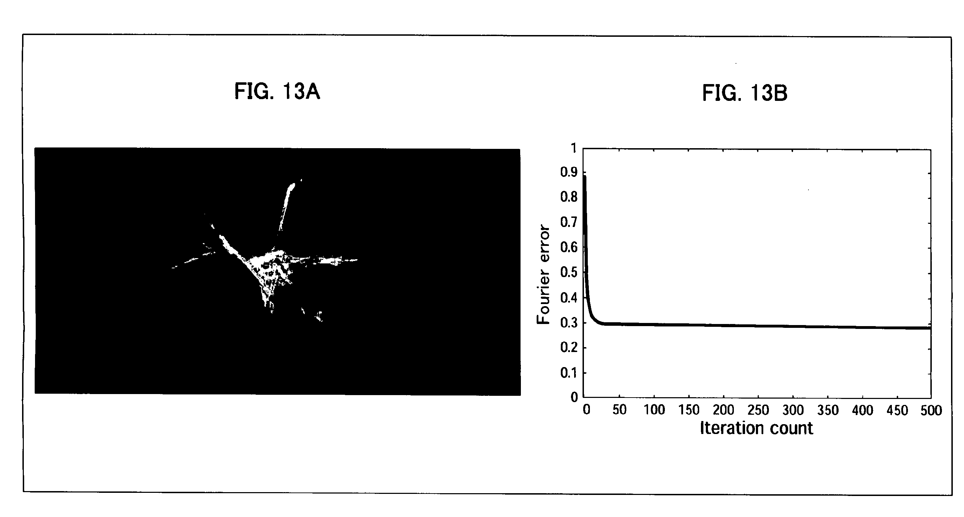

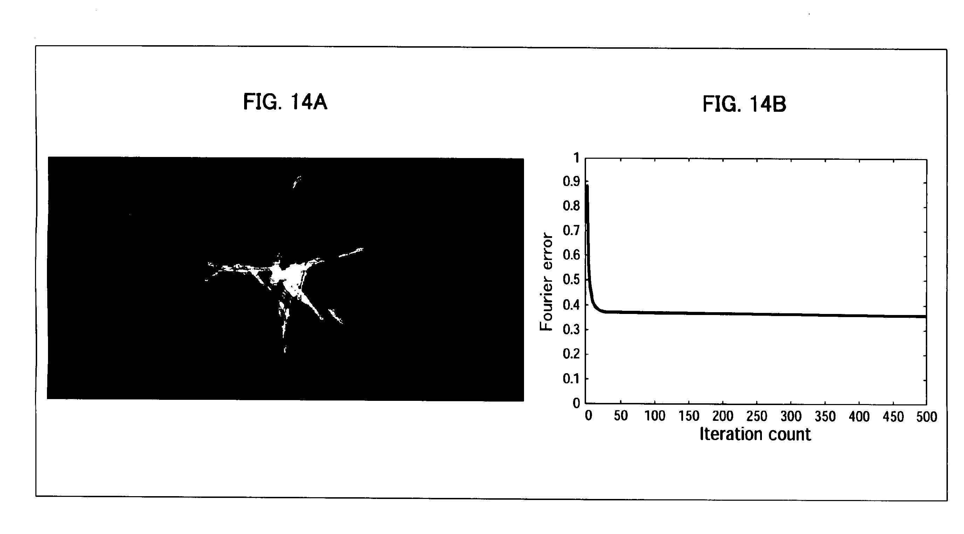

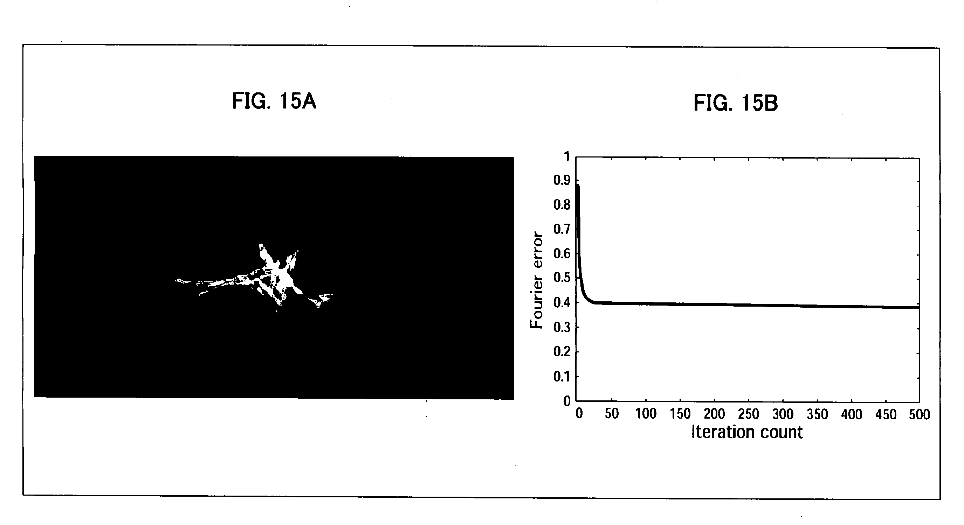

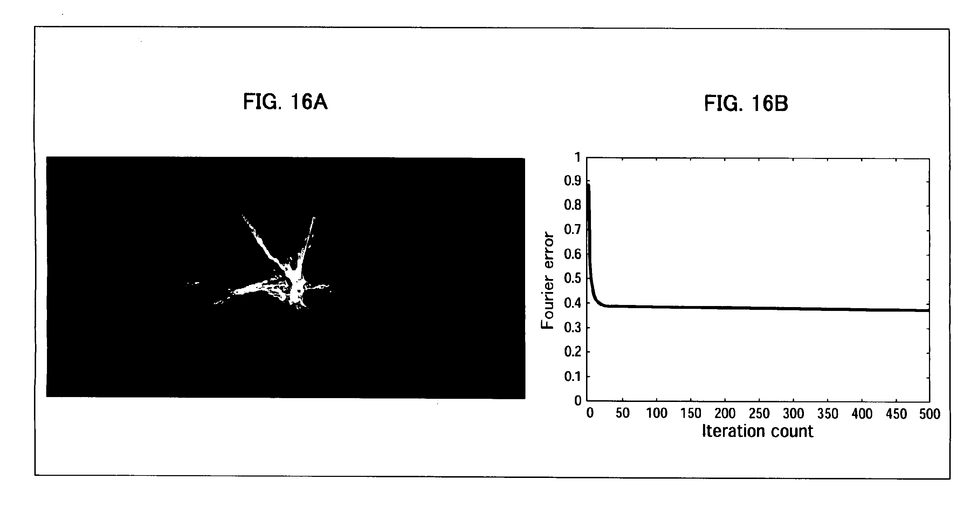

Herein, as shown in FIG. 12, a case will be considered where the measured support (white) is rotated compared to the true support (gray). Further, FIG. 13A, 13B to 16A, 16B show the reconstructed image and transition of Fourier error obtained when applying the ER algorithm using the this support condition. Herein, the maximum value of displacement by rotation produced in the actual measurement is assumed to be 45 degrees, and, measurement results of the support when rotating by 5 degrees, 15 degrees, 30 degrees, and 45 degrees will be used as examples. That is, FIG. 12A, 13 show a case of rotation by 5 degrees, FIG. 12B and 14 show a case of rotation by 15 degrees, FIG. 12C and 15 show a case of rotation by 30 degrees, and FIG. 12D and 16 show a case of rotation by 45 degrees.

When the support measurement result indicates rotation from the true support, as shown in FIG. 13A, 13B to 16A, 16B, it is understood that the reconstructed image does not converge to the correct image (FIG. 2).

(Case 3)

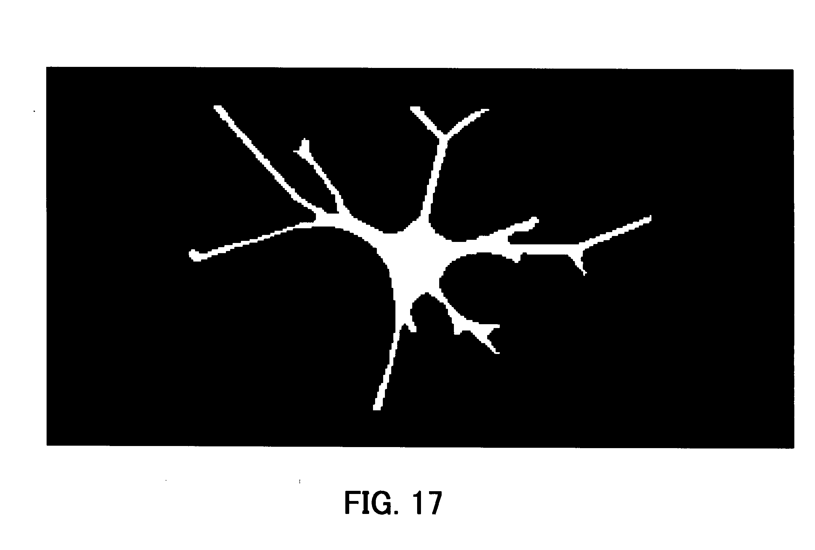

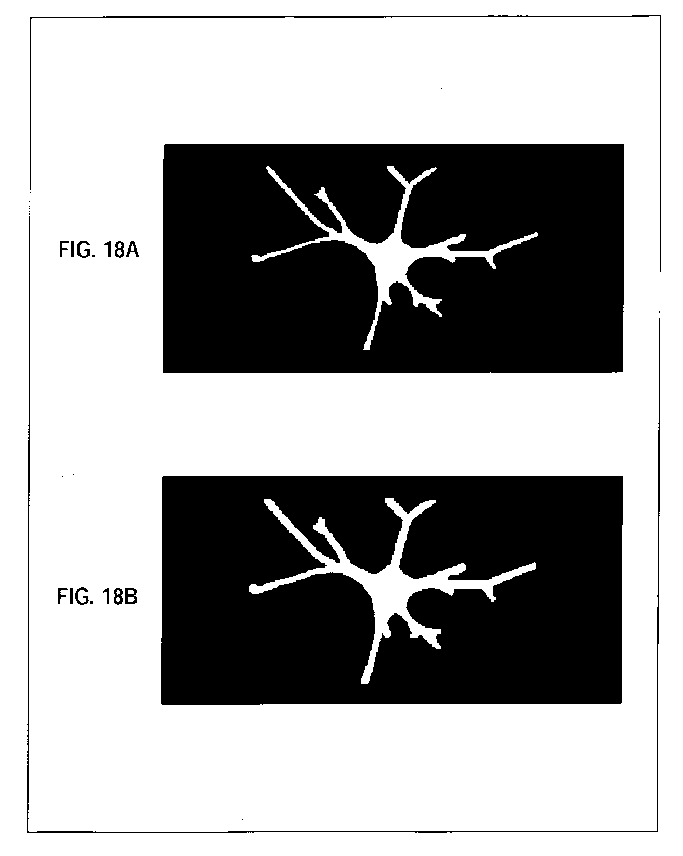

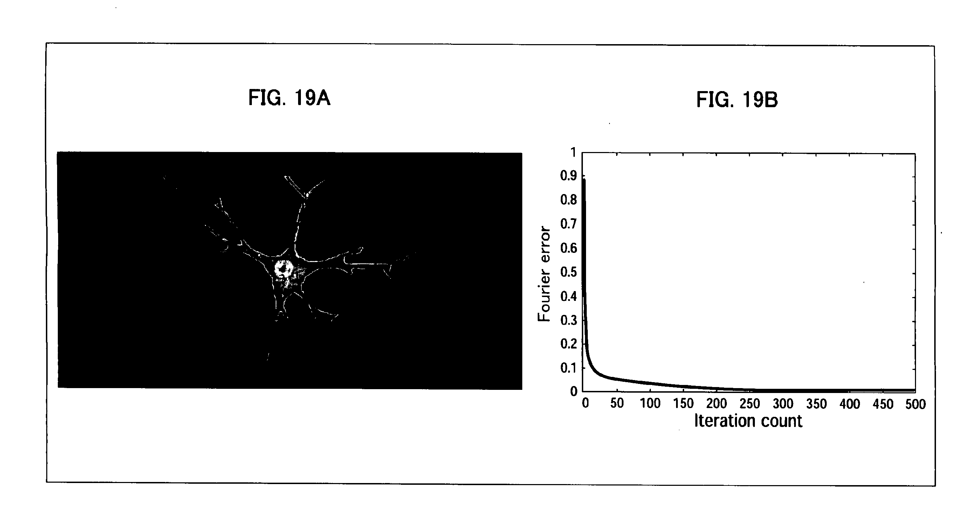

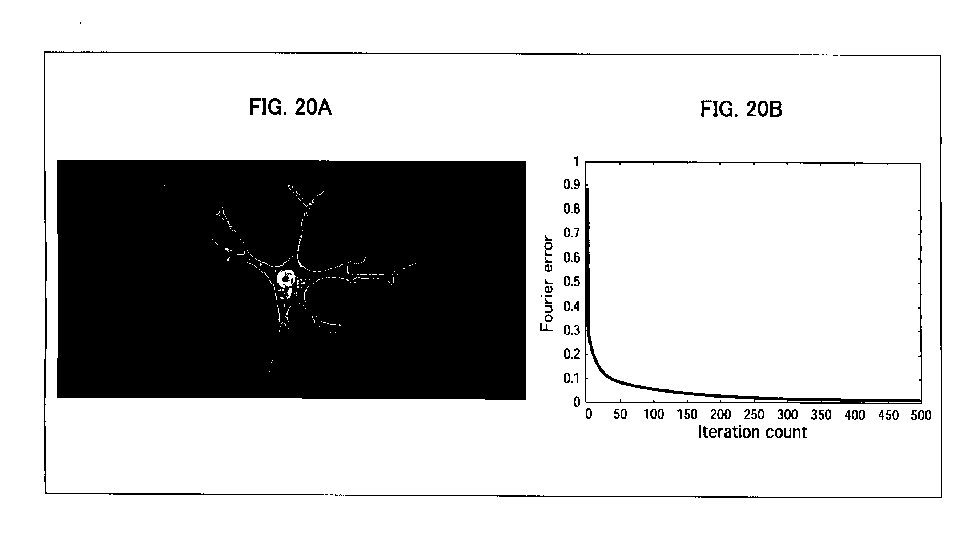

First, FIG. 18 shows a case of performing expansion processing on the true support (FIG. 17). Herein, the degree of expansion caused in the actual measurement is assumed to be about a maximum 7x7 filter window, and 3x3 and 7x7 filter windows are used as an example (FIG. 18A, 18B, respectively). Further, FIG. 19A, 19B and 20A, 20B show the reconstructed image and transition of Fourier error obtained by using the ER algorithm with the measured support shown in FIG. 18A, 18B.

Even when a support is used that is subjected to expansion processing of about a 7x7 or less filter window, as shown in FIG. 19A, 19B to 20A, 20B, it is understood that the reconstructed image converges to the correct image (FIG. 2).

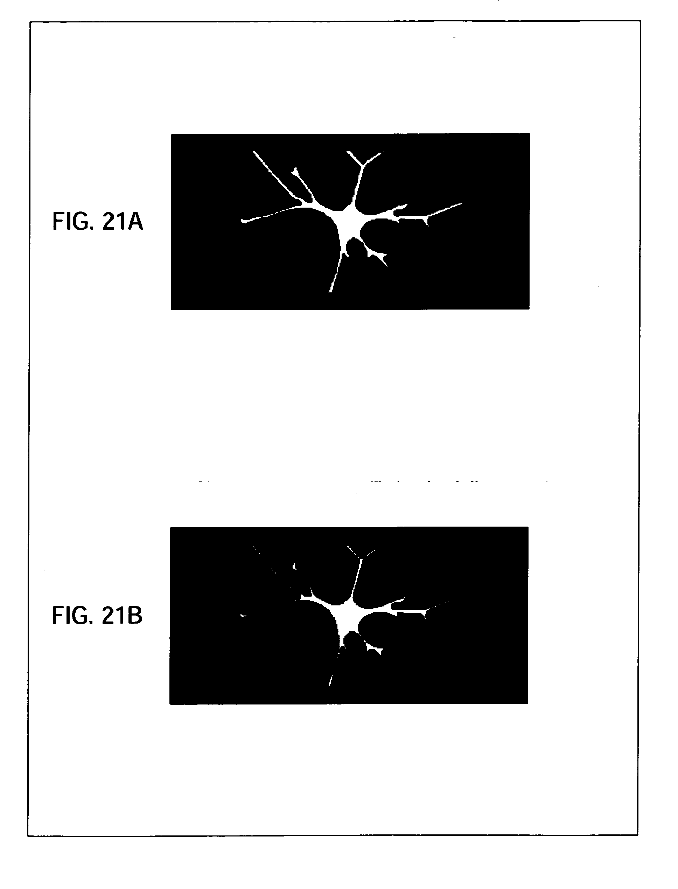

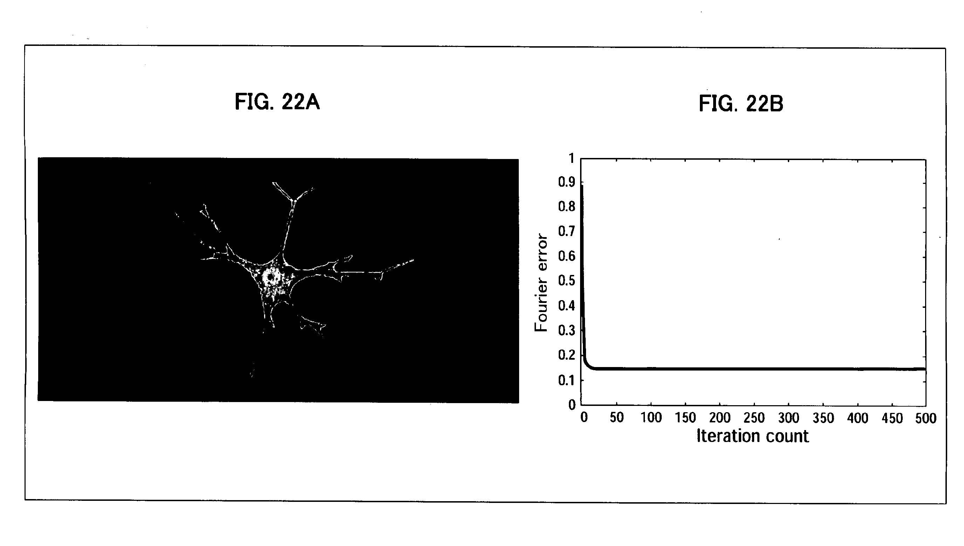

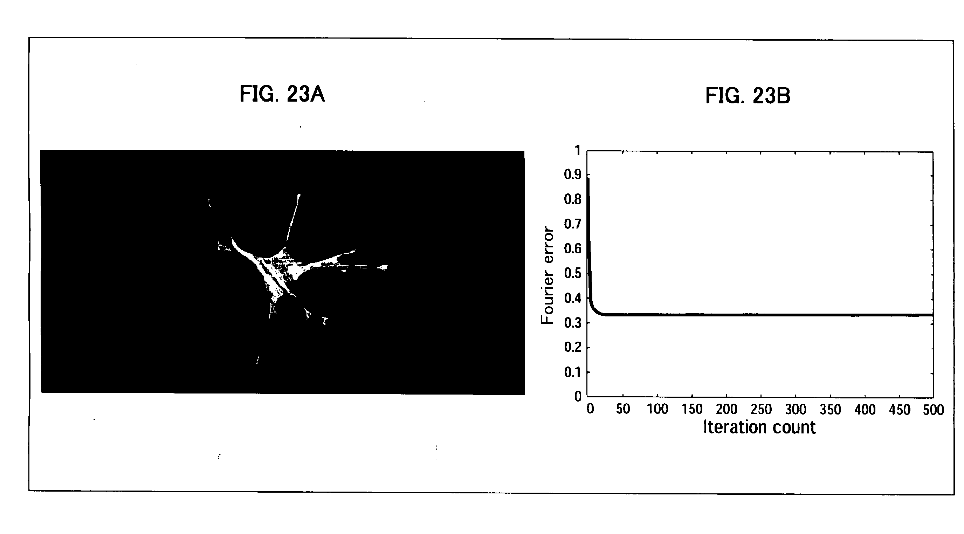

Next, FIG. 21 shows a case of performing contraction processing on the true support (FIG. 17). Herein, as mentioned above, the degree of contraction on caused in the actual measurement is assumed as a maximum 7x7 filter window, and $3\times3$ and $7\times7$ filter windows are used as examples (FIG. 21A, 21B, respectively) . Further, FIG. 22A, 22B to 23A, 23B show the reconstructed image and transition of Fourier error obtained by using the ER algorithm with the measurement supports shown in FIG. 21A, 21B.

When a support is used that is subjected to contraction processing, as shown in FIG. 22A, 22B and 23A, 23B, it is understood that the reconstructed image does not converge to the correct image (FIG. 2).

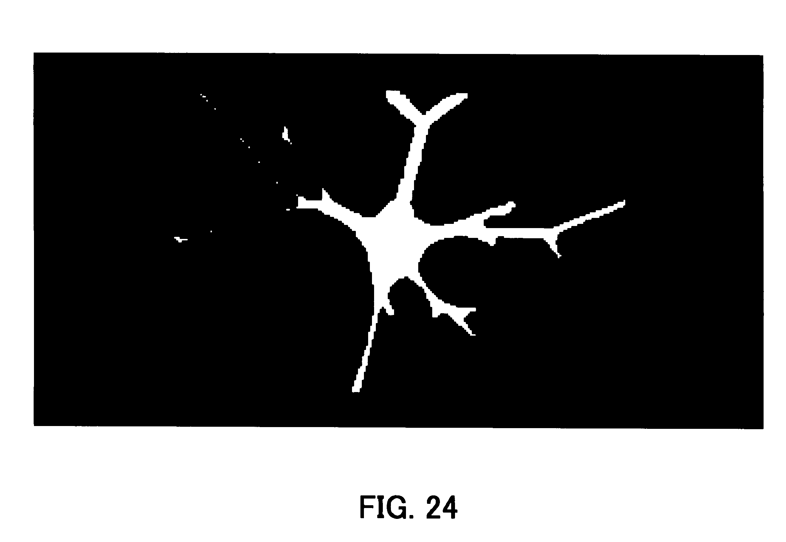

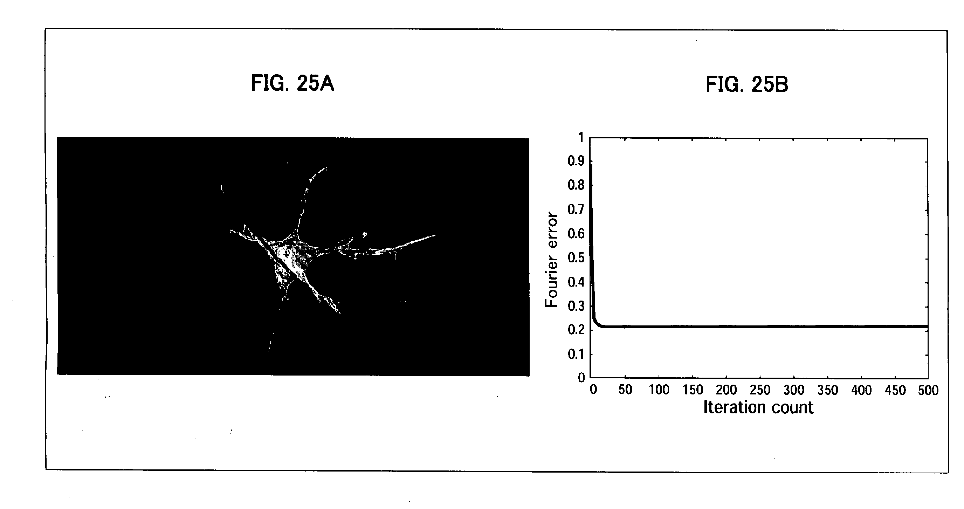

In the actual measurement, a support, to which the above (case 1) to (case 3) all or partly apply, is measured. Herein, as an example, FIG. 25A, 25B show reconstructed images and transition of Fourier error obtained by using the ER algorithm, by using an image indicating the support both expanded and contracted, for the true support (FIG. 17), as shown in FIG. 24.

From FIG. 25A, 25B, when a support that is both expanded and contracted is used, it is understood that the reconstructed image does not converge to the correct image (FIG. 2) due to the influence of contraction.

From the above-described experiments, it is understood that the reconstructed image by the ER algorithm is not converged to the original image and becomes stagnant in the following cases:

(1) Although an approximate contour (close to the true one) is obtained, the support is given with rotation.
(2) Although an approximate contour (close to the true one) is obtained, the support is given with contraction.
(3) The support influenced by both expansion and contraction is given.

This is new knowledge achieved by the experiment by the present inventors.

Accordingly, based on the above new knowledge, the present inventors have arrived at a new Iterative Fourier method for reconstructing an image with high accuracy even if the support is not accuracy known ,in particular the support is influenced by rotation or contraction, or is influenced by both expansion and contraction.

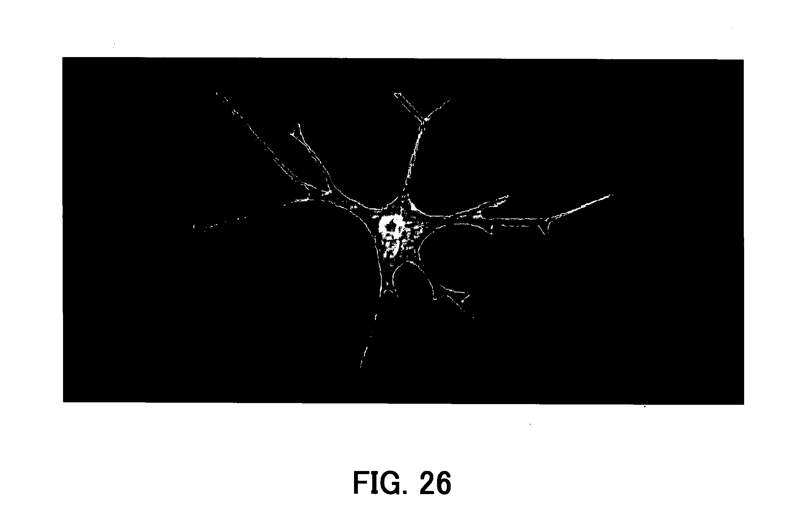

That is, as mentioned above, if the measured support is influenced only by expansion (or upward or downward displacement, or displacement to the left or right), the reconstructed image converges to the correct image. According to the present embodiment, the support measurement result is subjected to expansion processing, thereby creating a new support that includes the true support even if the support is influenced by rotation or contraction or is influenced by both expansion and contraction. At this time, the expanded part is further expanded. Thus, as shown in FIG. 26 (in the case of a filter window of $17\times17$), if the filter window for expansion processing is too large, there is problem that the reconstructed image does not converge to the correct image. According to this embodiment, the support condition is updated so as to be close to the true support, thereby avoiding the above problem. In order to update the support condition, an image is extracted using an algorithm called "Snakes" from the output image obtained by iterating the ER algorithm several times, and the extracted image is used as a new support condition. By using the Snakes in this way, it is possible to approximate the expanded image to the true support. Therefore, by iteratively performing the above processing, a highly accurate reconstructed image can be realized.

To summarize, according to this embodiment, expansion processing is performed before the Snakes is applied, and the support condition is updated using both the ER algorithm and the Snakes.

Herein, the Snakes is one of object extracting methods, and is also called a dynamic contour model. The details of the Snakes are shown in non-patent document 5 (M. Kass, A. Witkin, and D. Terzopoulos, "Snakes: Active contour models, " Int . J. Comput. Vis., vol. 1, pp. 312-331, 1988). The Snakes has a function of arbitrarily (properly) setting an initial contour when the true support is not obtained and contracting the contour based on the energy function defined by the theory of the Snakes, thereby providing the true support. More specifically, the Snakes is used for the image that is retrieved to some degree by the ER algorithm and the obtained image is set as a new support, thereby gradually making the support that is measured to be displaced from the true support (influenced by rotation or contraction or influenced by both expansion and contraction) closer to the true support.

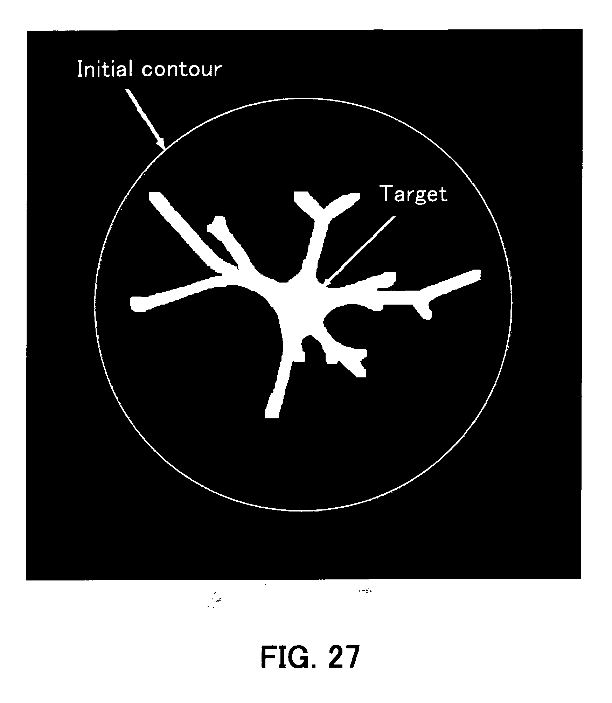

The initial contour of the Snakes is set to include the object to be extracted. FIG. 27 shows a setting example of the initial contour in the Snakes for the target that is the object to be extracted.

Further, the energy function is given in a 3D expression, using the grayscale value of a pixel in a grayscale image as height, and is equivalent to arranging an elastic body to include the observation target. The elastic body contracts (when force is removed), and the contraction stops at an edge having a large difference between grayscale values, and the edge can be extracted. The term "Snakes" means both the above-described algorithm and the above-described elastic body. Therefore, here, the former is also referred to as the "Snakes algorithm."

On the other hand, the ER algorithm has a function of retrieving the lost phase using the Fourier amplitude and the support as mentioned above and reconstructing the original image.

Herein, the Snakes algorithm will be described. The Snakes is a closed curve (v(s)=(x(s), y(s)) (0≤s≤1)), expressed on an image plane (x, y) using s as a parameter, and deforms an image so as to minimize an energy function (called "Snakes energy") defined by the following (Equation 6).

[Equation 6]

$$E_{snake} = \int_0^1 \left\{ E_{\text{int}}(v(s)) + E_{image}(v(s)) + E_{con}(v(s)) \right\} ds$$

According to this embodiment, a discrete image is a target. Therefore, the v(s) is expressed in replacement with a discrete point $v_i=(x_i, y_i)$ (i=1, 2, .., N) . Thus, (Equation 6) can be replaced with the following (Equation 7).

[Equation 7]

$$E_{snake} = \sum_{i=1}^{N} \left\{ E_{\text{int}}(v_i) + E_{image}(v_i) + E_{con}(v_i) \right\}$$

In (Equation 7), $E_{\text{int}}(v_i)$ is referred to as internal energy, indicating the smoothness of a contour model, and is defined by the following (Equation 8).

[Equation 8]

$$E_{\text{int}}(v_i) = \left( \alpha_i \| v_i - v_{i-1} \|^2 + \beta_i \| v_{i-1} - 2v_i + v_{i+1} \|^2 \right) / 2$$

where $\alpha_i$ and $\beta_i$ represent weighting factors. By the working of this $E_{\text{int}}(v_i)$ the Snakes receives smooth, contracting force. Further, $E_{image}(V_i)$ is referred to as an image energy, and frequently uses $E_{edge}(V_i)$ defined by the following (Equation 9).

[Equation 9]

$$E_{edge}(v_i) = -w_{edge} \left| \nabla I(v_i) \right|^2$$

where Wedge represents a weighting factor, and I ($v_i$) represents a luminance value at the position $v_i$ of the image. By the working of this $E_{edge}(v_i)$, the Snakes receives pulling force towards edges, which is a characteristic of image. Further, as disclosed in non-patent document 5, $E_{con}$ ($v_i$) is referred to as external energy and can variously be defined by paying attention to the characteristics of image. According to the first embodiment, a concave image is used as an extracting target. In order to enable the extraction of a concave contour, $E_{area}$ defined by the following (Equation 10) in non-patent document 6 (Toshihumi SAKAGUCHI and Koichi OHYAMA, "Snakes With Area Term," Shingaku-Shunki-Zendai, D-555, 1991), is used as external energy.

[Equation 10]

$$E_{area} = \frac{1}{2}\sum_{i=1}^{N}\left[ x_i \left( y_{i+1} - y_i \right) - \left( x_{i+1} - x_i \right) y_i \right]$$

$E_{area}$ in (Equation 10) is referred to as an area term, and is the area surrounded by $v_i$(i=1, 2, .., N) . This area term is added to energy of the Snakes, thereby increasing energy in proportion to the area surrounded by the contour model, and, during the step of minimizing energy, force for reducing the area works, thereby enabling the extraction of the concave contour.

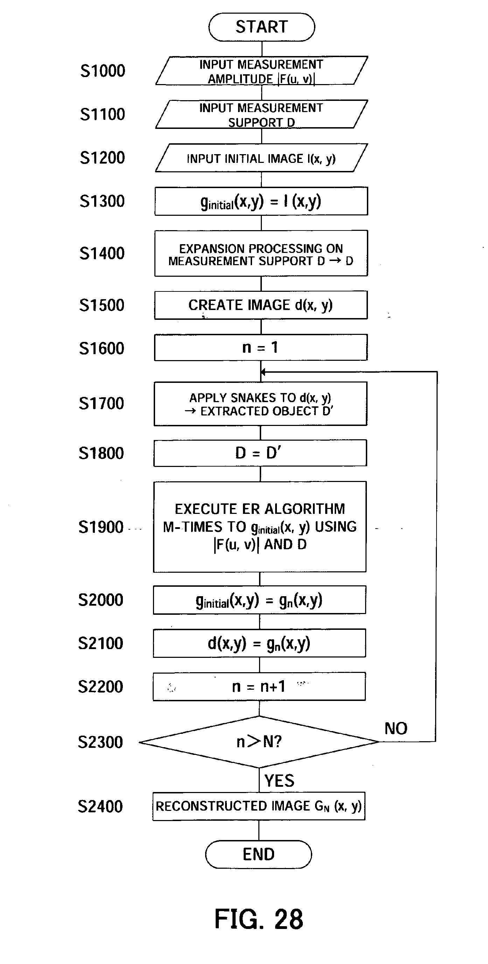

FIG. 28 is a flowchart showing the processing of the Iterative Fourier method using the Snakes, according to this embodiment.

First, in step S1000, the Fourier amplitude F (u, v) of the measured original image is input.

Then, in step S1100, measured support D is input.

Then, in step S1200, an initial image I (x, y) is input.

The sequence of steps S1000 to S1200 is not limited to this and can be freely modified.

In step S1300, the initial image I(x, y) input in step S1200 is set as $g_{initial}$ (x, y). Herein, $g_{initial}$ (x, y) is an input image of the processing in step S1900.

In step S1400, the support D input in step S1100 is subjected to expansion processing, and the result of the expansion processing is made a new support D. Herein, the expansion processing is performed so that the new support after the expansion processing includes the true support.

In step S1500, an image d (x, y) is generated in which values outside the support are 0.

In step S1600, counter n is set to 1.

In step S1700, the Snakes algorithm is applied to the current image d (x, y) and an object D' is then extracted.

Then, in step S1800, the object D' extracted in step S1700 is made a new support D.

In step S1900, the ER algorithm is applied to the image of $g_{initial}$ (x, y) obtained in step S1300 with the Fourier amplitude F (u, v) input in step S1000 and the current support D by M times, thereby obtaining the output image $g_n$ (x, y).

Then, in step S2000, an output image $g_n$ (x, y) obtained in step S1900 is a new image $g_{initial}$ (x, y).

Then, in step S2100, the output image $g_n$ (x, y) obtained in step S1900 is made a new image d(x, y).

In step S2200, a counter n is incremented by one.

In step S2300, it is determined whether or not the value on counter n is larger than a preset number of iterations (N). As a result of this determination, if n≤N is determined (S2300: NO), the method returns to step S1700, and, if n>N (S2300: YES), the method proceeds to step S2400.

In step S2400, the output image $g_N$ (x, y) obtained by iterating processing in steps S1700 to S2100 N times is output as the reconstructed image that is finally obtained according to this technique, and the series of the processing ends.

To summarize, with this technique, as sequence 1, the initial image I (x, y) is made $g_{initial}$ (x, y). As sequence 2, the measured support is then subjected to expansion processing. As sequence 3, the image d (x, y) representing the support D is then produced. As sequence 4, the Snakes algorithm is then applied to the image d(x, y), thereby extracting the object D'. As sequence 5, the object D' extracted in the sequence 4 is then a new support. In addition, as sequence 6, with the support D obtained in sequence 5 and the Fourier amplitude | F (u, v) | of the measured original image, the ER algorithm is applied to the image $g_{initial}$ (x, y) by M times, thereby obtaining the output image $g_n$(x, y) . As sequence 7, the obtained output image $g_n$ (x, y) is then input to the image $g_{initial}$ (x, y). As sequence 8, the obtained output image $g_n$(x, y) is then input to the image d (x, y) . As sequence 9, the sequences 4 to 8 are implemented for a preset number of iterations (N times), thereby reconstructing the image. The obtained output image $g_N$ (x, y) after N times is the reconstructed image finally obtained by this technique.

According to this embodiment, with respect to the use of the ER algorithm and the Snakes algorithm together, as the order of application, the processing starts from the Snakes algorithm, and ends with the ER algorithm. The present invention is not limited to this, however. That is, the processing does not necessarily have to start from the Snakes algorithm or end with the ER algorithm. However, with this embodiment, for the following reasons, the processing starts from the Snakes algorithm and ends with the ER algorithm.

First, the reason the processing starts from the Snakes algorithm is as follows. By the ER algorithm, image is not retrieved in portions other than the support. Therefore, before using the Snakes algorithm, initial Snakes to be set needs to completely include the true support. Therefore, if there is a threat that the support obtained by contracting the true support is given, preferably, the obtained support is subjected to expansion processing and the Snakes algorithm is thereafter applied. Therefore, the support influenced by contraction is first subjected to expansion processing, and the processing thereafter starts from the Snakes algorithm. However, if the given support completely includes the true support, for example, in the case of rotation or enlargement, the processing does not necessarily have to start from the Snakes algorithm.

Further, the reason the processing ends with the ER algorithm is as follows. For example, assuming that the processing ends with the Snakes algorithm and the Snakes algorithm ends at the m-th time, the result becomes the support used when the ER algorithm is applied for a (m+1) -th time. Therefore, when the ER algorithm ends at an M-th time, even if the support is updated by using the Snakes algorithm after the M-th time ER algorithm, the updated support is not used and the pertaining processing becomes loss. Therefore, in this embodiment, the processing ends not with the Snakes algorithm, but with the ER algorithm.

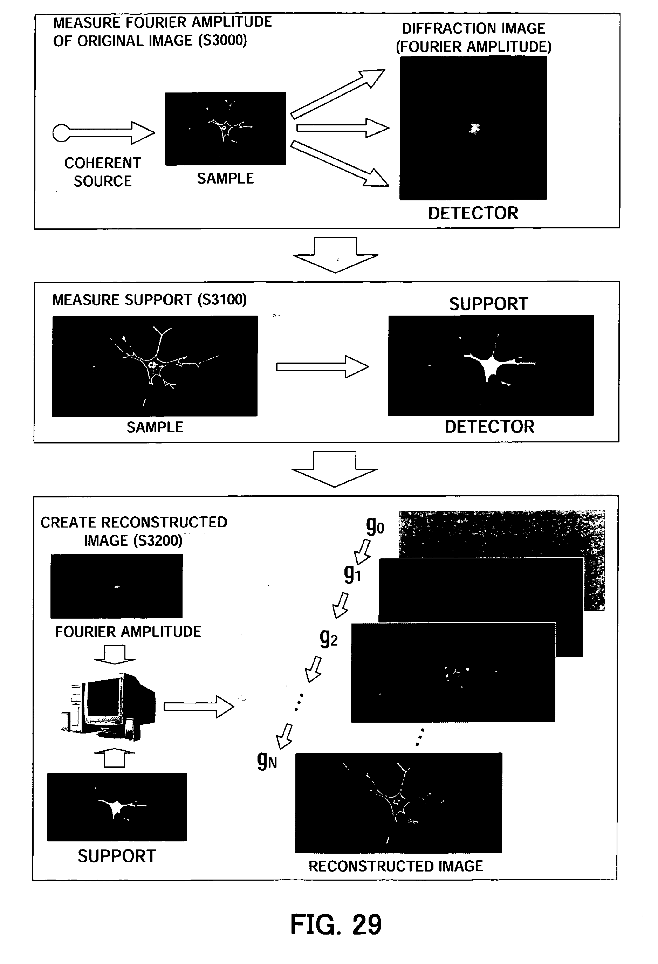

FIG. 29 is a schematic diagram showing an overall configuration for realizing this technique.

First, in step S3000, the Fourier amplitude of the original image is measured. This measurement is performed by inputting coherent waves to a sample from the source (source of incident waves) and recording the scattered waves as diffraction images by a detector.

In step S3100, the support is measured. This measurement is performed by obtaining a rough, real image by the detector using a physical lens. The order of steps S3000 and S3100 may be reversed.

In step S3200, a reconstructed image is produced. Specifically, a calculator uses the Fourier amplitude measured in step S3000 and the support measured in step S3100 and applies a method (algorithm) shown in FIG. 28, thereby obtaining the reconstructed image $g_N$.

Next, an experiment example is shown. Herein, using an actual image, advantage of this technique when the measured support is displaced from the true support will be described.

Conditions are as follows. Under the support condition as the constraint condition of the image domain, as the measured support, an image (FIG. 24) indicating the support influenced by the mix of the expansion and the contraction to the true support (FIG. 17) is used. Further, under the constraint condition of the Fourier domain, the amplitude (FIG. 3) of the original image is used as a measurement amplitude.

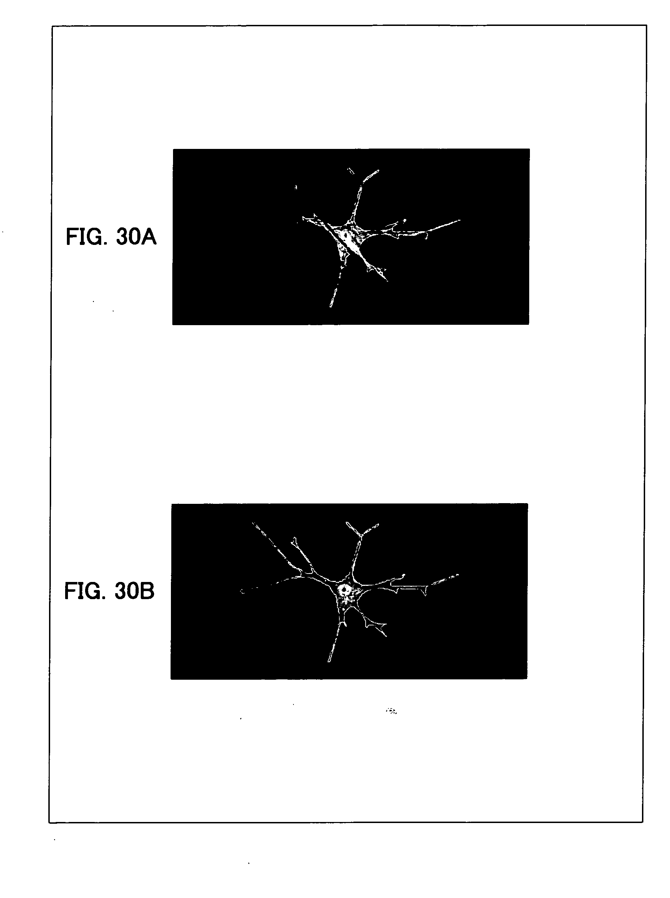

FIG. 30A, 30B show images reconstructed by applying the ER algorithm and this technique to the initial image (FIG. 4) using the above condition. That is, FIG. 30A shows a reconstructed image obtained by applying the ER algorithm, and FIG. 30B shows a reconstructed image obtained by applying this technique. From FIG. 30A, it is understood that the reconstructed image does not converge to the original image (FIG. 2) when the ER algorithm is used. On the other hand, as shown in FIG. 30B, with this technique, the reconstructed image converges to the original image (FIG. 2). That is, it is understood that the image can be accurately retrieved with high accuracy with this technique even if the support is not accurately known.

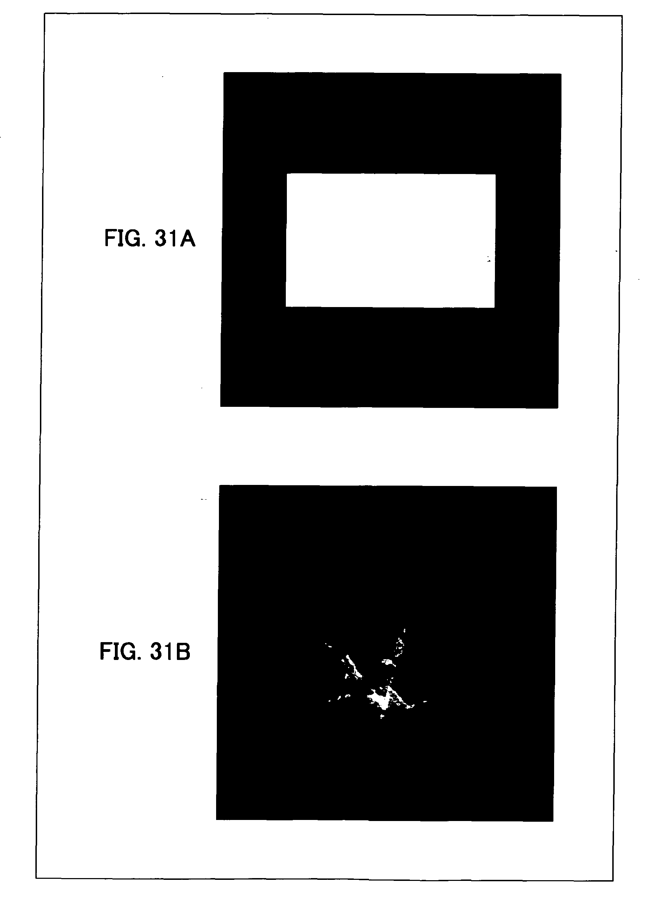

FIG. 31 shows the result of the ER algorithm when the support is square. That is, FIG. 31A shows a square support, and FIG. 31B shows the reconstructed image obtained by using the support in FIG. 31A and the amplitude of the original image (FIG. 3) and applying the ER algorithm. Herein, the original image is the image shown in FIG. 2. In this case, it is understood that the reconstructed image does not converge to the original image (FIG. 2).

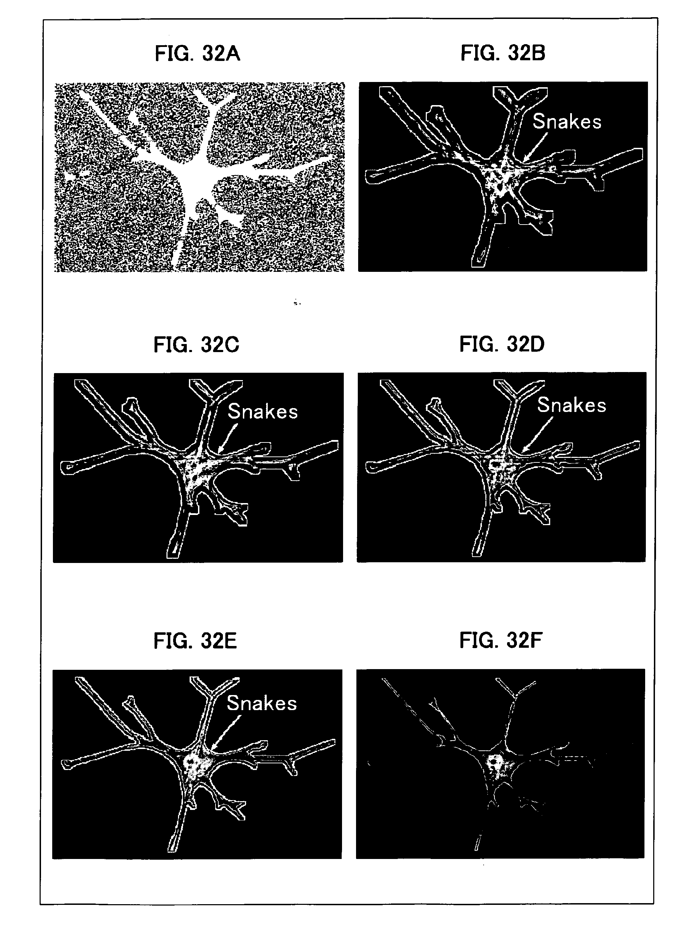

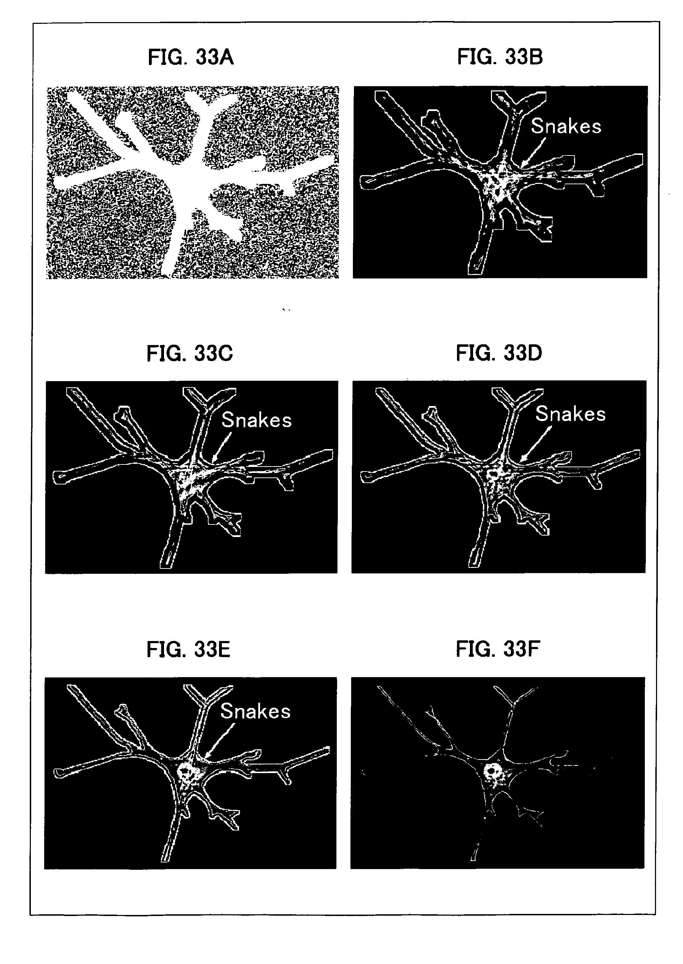

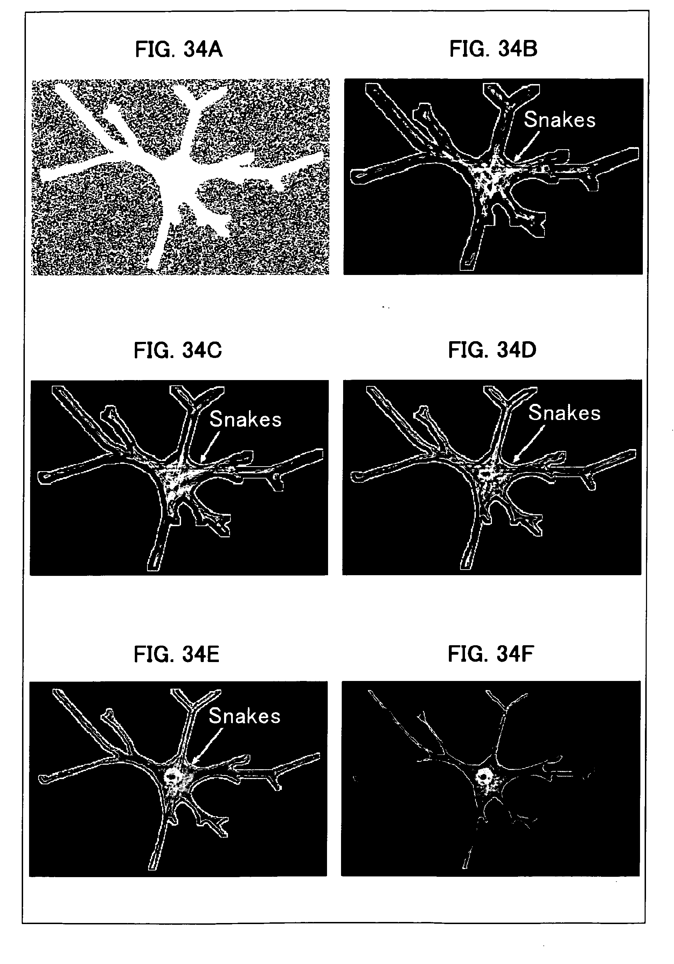

FIG. 32 to 34 show the reconstructed images with this technique in the case of using supports influenced by the contraction, expansion, and rotation, respectively. That is, FIG. 32 shows the reconstructed image by this technique when the measured support is influenced by convergence, FIG. 33 shows the reconstructed image by this technique when the measured support is influenced by expansion, and FIG. 34 shows the reconstructed image by this technique when the measured support is influenced by one-degree rotation. Values of parameters used in this technique based on the Snakes are as follows. With the experiment, three parameters $\alpha_i$, $\beta_i$ and $W_{edge}$ in (Equation 8) and (Equation 9) of the Snakes algorithm are set to $\alpha_i=0.4$, $\beta_i=0.4$, and $w_{edge}=1.5$, respectively. These three parameters used in the Snakes algorithm are set to difference values depending on the shape of the extraction target object. Further, as for M (the number of times the ER algorithm is applied) in step S1900 and N (the number of iterations of the sequence) in step 2300 in FIG. 28, M=50 and N=5 are set, respectively. From FIG. 32 to 34, when this method is used, it is understood that the reconstructed image converges to the original image (FIG. 2). In the initial images shown in FIG. 32A to 34A, the image shown in white is a new support obtained by performing expansion processing on the measured support.

Next, a comparison example between this method and the conventional Iterative Fourier method is shown.

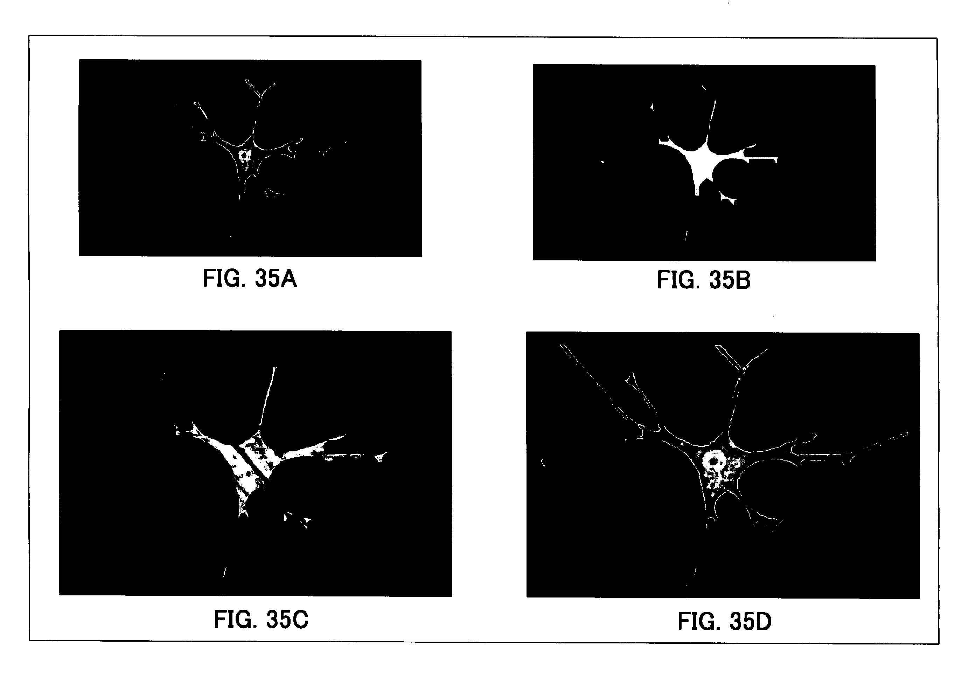

FIG. 35 shows a case in which the measured support is influenced by contraction. That is, FIG. 35A is a diagram showing the original image, FIG. 35B is a diagram showing the measured support influenced by contraction, FIG. 35C is a diagram showing the reconstructed image obtained by using the support in FIG. 35B and employing the conventional Iterative Fourier method, and FIG. 35D is a diagram showing the reconstructed image obtained by using the support in FIG. 35B and employing this technique. According to the conventional Iterative Fourier method, as shown in FIG. 35C, the reconstructed image does not converge to the original image (FIG. 35A) . However, according to this technique, as shown in FIG. 35D, the reconstructed image converges to the original image (FIG. 35A).

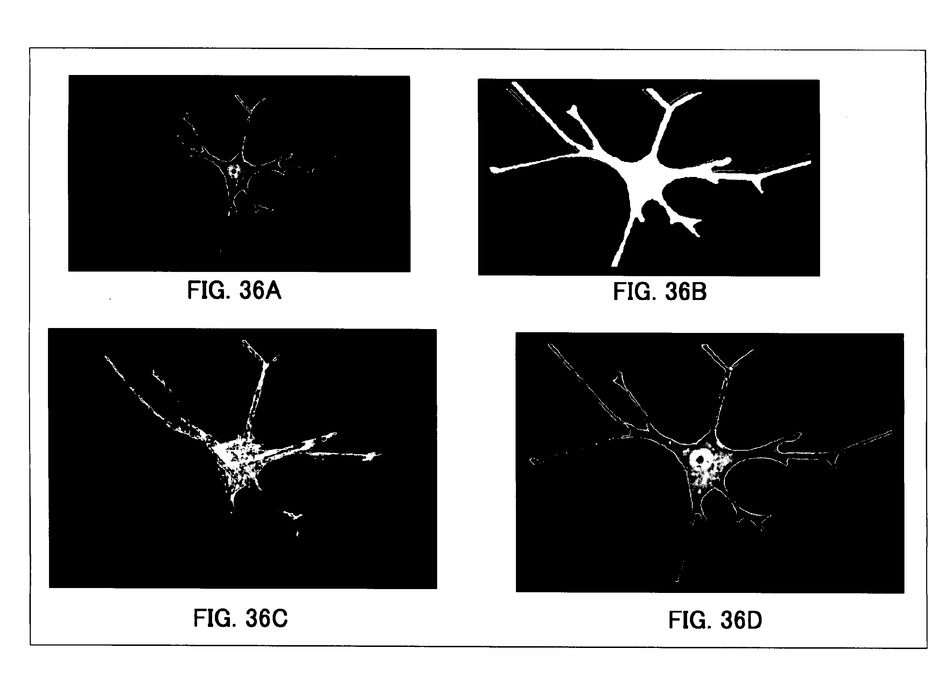

Further, FIG. 36 is a diagram showing a case in which the measured support is influenced by rotation. That is, FIG. 36A is a diagram showing the original image, FIG. 36B is a diagram showing the measured support influenced by rotation, FIG. 36C is a diagram showing the reconstructed image obtained by using the support in FIG. 36B and employing the conventional Iterative Fourier method, and FIG. 36D is a diagram showing the reconstructed image obtained by using the support in FIG. 36B and employing this method. According to the conventional Iterative Fourier method, as shown in FIG. 36C, the reconstructed image does not converge to the original image (FIG. 36A). However, according to this technique, as shown in FIG. 36D, the reconstructed image is converged to the original image (FIG. 36A).

In this way, according to this embodiment, the measured support is subjected to the expansion processing before using the Snakes algorithm, and the support condition is updated with both the ER algorithm and the Snakes algorithm. Even if the support is not accurately known, the image can be retrieved with high accuracy.

According to the this embodiment, the Snakes is used. The reasons thereof are as follows. That is, if the ER algorithm is implemented using a support that is greatly influenced by expansion, it is difficult to converge to the correct original image as shown in FIG. 26. On the other hand, with the true support, as shown in FIG. 5, the reconstructed image by the ER algorithm converges to the original image. From the experiment, it is understood that, if the ER algorithm is iteratively used using a support subjected to expansion processing, the reconstructed image gradually becomes close to the true support. However, when the degree of expansion is large, the convergence speed of the true support is slow. In some cases, the complete convergence is not achieved. Then, the reconstructed image is extracted with the Snakes algorithm every certain number of times, the support is contracted to gradually become closer to the true support. As a consequence, the reconstructed image gradually converges to the original image. Since the Snakes is known to be an effective method for extracting a target object having unclear edge, the Snakes may be also effective for extracting roughly the edge of the reconstructed image that is not completely converged is extracted and contracting the support.

Therefore, if "contraction" is possible, application may be possible with methods other than the Snakes. Specifically, the following three methods may be possible.

The first is a combination of an edge extraction algorithm and image processing such as area extraction. That is, the processing of extracting edge, selecting the domain formed with the edge, and using the selected domain (or its expansion domain) as the support is performed.

The second is extraction of the support using texture extraction. The texture extraction technique refers to a method of selecting a lattice-patterned area or a polka-dotted area from the image. When the support is unknown or an area including an error is given, the reconstructed image by the ER algorithm is not the true image, and a lattice pattern appears at the position of the observation target. Therefore, a general method of texture extraction is applicable.

The third is an optimization method. For example, assuming that an object exists in an arbitrary support, the method sets all the object shapes that are possible by the GA (Genetic Algorithm), which is the optimummethod, as a search range and finds the optimum object.

Further, regarding the applicable field of the present invention, the present invention is applicable to any field as long as apparatus is involved where the Fourier amplitude of the original image and the domain occupied by the original image (support) are provided as known information. For example, in electronic microcopy, astronomical observation, and X-ray crystallography, the above two pieces of information are generally obtained by measurement, and so application is possible. Regarding an overall configuration of the apparatus, as shown in FIG. 29, first, the Fourier amplitude and the support of the original image are measured with a predetermined apparatus, and the reconstructed image is obtained with the two pieces of information by using a calculator using a phase retrieval algorithm according to the present invention.

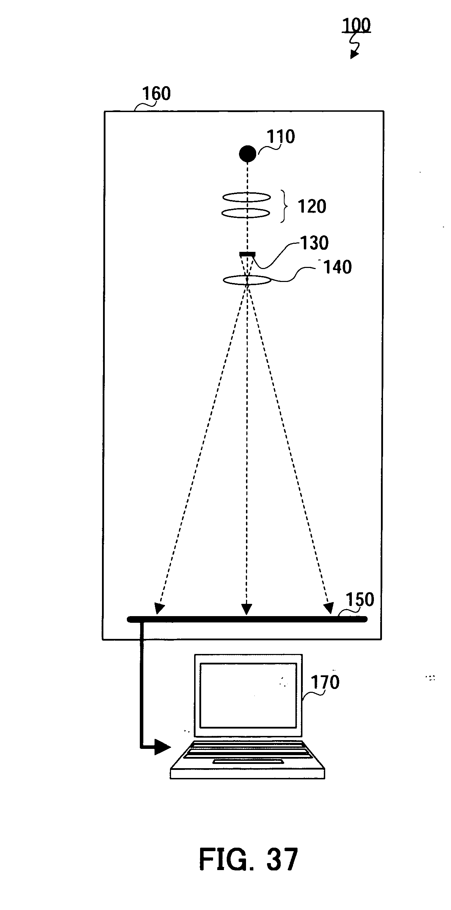

FIG. 37 is a block diagram showing a general structure of an electronic microscope. In this electronic microscope 100, electron beams generated in electron source 110 become parallel electron beams by a parallel irradiation lens system 120, are irradiated to sample 130 and are scattered. The scattered diffraction waves are recorded by detector 150 via object lens 140. Herein, the Fourier amplitude and the area occupied by the original image (support) are measured by detector 150. Vacuum casing 160 encloses electron source 110, parallel irradiation lens system 120, sample 130, object lens 140, and detector 150.

Detector 150 is connected to computer 170. Computer 170 stores, as software, the phase retrieval algorithm according to the present invention, and creates reconstructed images using the Fourier amplitude and support of the original image measured by detector 150.

As mentioned above, the present invention is applicable to any field as long as the Fourier amplitude of the original image and the area occupied by the original image (support) are provided as known information. Although the present invention has been described with reference to a case where although a measurement error is caused in the support, when noise occurs in the measured Fourier amplitude, it becomes necessary to remove noise by some method. In order to solve the problem, for example, there are non-patent document 7 (written by Tohru TAKAHASHI, Hiroaki TAKAJO, and Tetsuya KUBO, "An Algorithm for Object Recovery from the Contaminated Fourier Modulus," Optics, vol. 25, pp. 223-227, 1996) and non-patent document 8 (written by Tohru TAKAHASHI, Hiroaki TAKAJO, Katsuhiko ITOH, and Toshiro FUJIZAKI, "An Improvement of the Iterative Fourier-TransformMethod for Phase Retrieval," Optics, vol. 32, pp. 39-45, 2003). Therefore, when noise is caused in the measured Fourier amplitude, the problem is solved by replacing the part of the ER algorithm with these methods.

(Second embodiment)

The ER algorithm provides many advantages such as a low amount of calculation required and applicability to two-dimensional objects. However, even if the Fourier amplitude and the support are accurately given, the ER algorithm is unable to arrive at the correct image (solution) depending on the initial image and stagnates with images other than the correct one, as disclosed in non-patent document 9 (refer to (Hiroaki TAKAGI, Toru TAKAHASHI, Masanori TERATORI, and Tadahiro NAGANO, "Consideration using numeral simulation of stagnation in iterative phase retrieval algorithm," Optics, vol. 21, pp. 119-127, 1992).

According to non-patent document 9, when the phases of the three highest frequency components of the original image do not match with the initial image in the case of a $2\times2$ L-shaped object, the ER algorithm has a feature of causing complete stagnation or incomplete stagnation. Herein, complete stagnation means having a convergence image different from the original image, and incomplete stagnation means causing stagnation in the halfway and yet converging to the original image later. Specifically, in the case of the $2\times2$ L-shaped object, an arbitrary initial image is divided into four domains depending on the differences of the phases of the three highest frequency components, and, among them, the number of domains that can converge to the original image is one in the case of complete stagnation and two in the case of incomplete stagnation. Further, three boundaries forming the four domains are generated at the positions of an image having the Fourier amplitude (0) of one of the three highest frequency components in the arbitrary initial image.

As a result of studying the above characteristics of the ERalgorithm for the 2x2 L-shapedobject, the present inventors have found that, to prevent complete stagnation and allow the reconstructed image to converge to the original image, it is necessary to find a domain that converges to the original image from four domains produced from specific frequencies of an arbitrary initial image (in the case of a $2\times2$ L-shaped object, the three highest frequency components). That is, the present inventors have found that, since this domain is comprised of the phases of the three highest frequency components, to converge the reconstructed image to the original image, it is necessary to make the combination of the phases of the highest frequency components of the initial image match with the combination of the phases of the original image.

Further, non-patent document 9 discloses a numeric-value simulation using a $2\times2$ L-shaped small object as an example, with a finding that it is found that the cause of the above problem of stagnation cannot be completely solved for an object having complicated grayscale values in the reconstructed image (hereinafter "large-scale object"). However, according to the present invention, a large object is also a possible target. With a large object, in addition to the boundary caused at the position of the object having the Fourier amplitude of 0 of the three highest frequency components, the Fourier amplitude of specific frequencies becomes 0 and so a large number of boundaries are generated at their positions. The number of domains caused from the arbitrary initial image therefore increases, and, in accordance with this, the number of combinations of phases of the domain formed with the specific frequencies becomes enormous. It is difficult to find the domain having the original image from the domain comprised of combinations of numerous phases.

The present invention focuses on the phases of the domain formed with specific frequencies, and, from the combinations of possible phases, makes the combination of the phases of the domain formed with specific frequencies in an arbitrary initial image match with the combination of the phases at the corresponding frequencies in the original image, using the optimization method. According to this embodiment, a genetic algorithm (GA) is used as the optimization method.

Further, in order to easily implement the genetic algorithm, the Fourier amplitude |F| is subjected to lowpass filtering processing before applying the genetic algorithm, and the number of elements of the Fourier amplitude is reduced. That is, the number of elements of the Fourier amplitude is reduced, thereby reducing the size of |F|. Further, the number of combinations of phases to be searched by the genetic algorithm can be reduced. By this means, in the case of the large object, the correct image can be obtained for in a short calculating time.

Herein, the genetic algorithm is a method of searching for the optimum resolution of the optimization of combinations, and models the phenomenon that an organism group evolves by repeating natural selection. That is, a plurality of individuals, i.e., solution candidates are generated, and genetic operations including selection, crossing, and mutation evolution are repeated in accordance with fitness to individual environment, thereby obtaining the optimum solution. The genetic algorithm has merits that a practical solution is given to the optimization problem that cannot be searched according to the conventional method because of a wide search space, an evaluation function for evaluating a solution can be flexibly set, and a differentiated value of the evaluation function is not necessary in the search procedure.

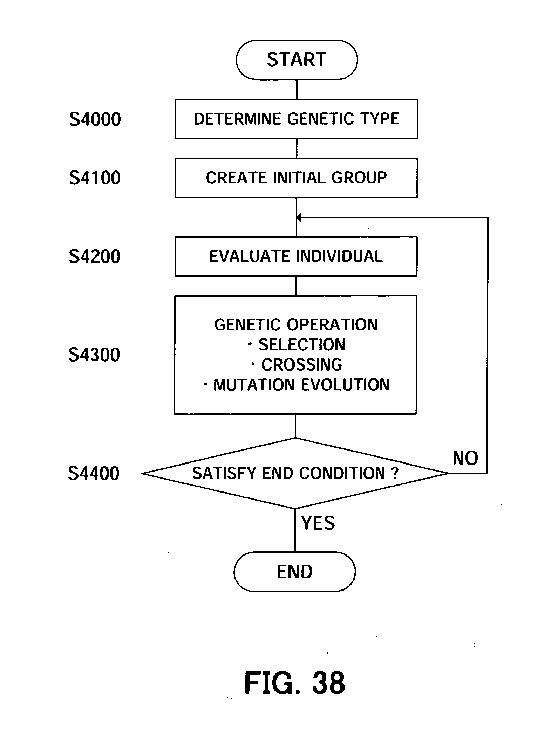

FIG. 38 is a flowchart showing a sequence of the genetic algorithm according to this embodiment.

First, in step S4000, a genetic type is determined. That is, an event serving as a problem of the genetic algorithm is modeled. Specifically, a solution candidate of a targeted problem is encoded to a character string of 0's and 1's of a predetermined length. A character string corresponds to one individual. The individuals according to this technique indicate phases forming an area comprised of "0" or "TT ", and the genetic type has a character string "0" or "1" expressing the phase as a gene.

In step S4100, an initial group is created. That is, in accordance with the genetic type determined in step S4000, a plurality of organism individuals are created. Specifically, possible solution candidates are randomly created.

In step S4200, the individuals are evaluated. That is, the fitness under the adaptable environment is calculated. Specifically, the individuals are evaluated by the following evaluation function. Herein, the following two evaluation functions of the fitness are considered.

First, the above Equation (Equation 5) indicating the Fourier error is set as the evaluation function. In this case, as the individual has a smaller value of the evaluation function, the fitness is higher. In the case of using the evaluation function, the individual is selected using a rank strategy (the individual is selected in step S4300). Herein, the rank strategy means that each individual is ranked according to the fitness, and remains with a predetermined probability determined to each rank. The selecting probability of each individual depends on the rank, not on the fitness.

Secondly, a reciprocal of the Fourier error, that is, the following (Equation 11) is regarded as the evaluation function.

[Equation 11]

$$ 1/E_{F_m} = 1 \bigg/ \sqrt{\frac{\sum_{u,v}\left\{\left|G_m(u,v)\right| - \left|F(u,v)\right|\right\}^2}{\sum_{u,v}\left|F(u,v)\right|^2}} $$

In this case, since $E_{Fm}$ at an iteration count m in the original image is zero, the evaluation function becomes infinite. In this case, there are two solutions. First, a fine positive value is added so that $E_{Fm}$ is approximate to 0 in order to set an infinite fine positive value. Secondly, a numeral is assigned using the rank strategy and the individual is selected (the individual is selected in step S4300). With the rank strategy, the same order may be used in the case of the same evaluation value. Therefore, even if the value of the evaluation function becomes infinite, there will be no problem.

In step S4300, the genetic operation is performed. The genetic operations include selection, crossing, and mutation evolution. In the selection, the individual is selected based on the evaluation of the individual. In the crossing, genetic information defined as genetic types are exchanged between the individuals, thereby creating a new individual. In the mutation evolution, a symbol string of the genetic information defined as a genetic type is changed at a specific probability, thereby creating a new individual. The mutation evolution is achieved by replacing a gene of the individual at a constant probability from "0" to "1" or "1" to "0" .

In step S4400, it is determined whether or not an end condition is satisfied. Herein, the end condition means an end condition of search and, specifically, when the turnover of all generations reaches a preset value or when a condition based on the fitness is set and it is satisfied, the search ends. As a result of this determination, when the end condition is satisfied (S4400: YES), a series of the processing ends. When the end condition is not satisfied (S4400: NO), the processing returns to step S4200 and the processing in steps S4200 to S4300 is repeated.

Herein below, a description will be given with examples. First, as the original image, an image f (4×4 size) including an L-shaped support of a small object of 2×2 size indicated in the following (Equation 12) is used.

[Equation 12]

$$ f = \begin{pmatrix} 0 & 0 & 0 & 0 \\ 0 & c & 0 & 0 \\ 0 & a & b & 0 \\ 0 & 0 & 0 & 0 \end{pmatrix} $$

where a, b and c are positive real numbers. Next, assume that an initial image go is the following (Equation 13) .

[Equation 13]

$$g_0 = \begin{pmatrix} 0 & 0 & 0 & 0 \\ 0 & c_0 & 0 & 0 \\ 0 & a_0 & b_0 & 0 \\ 0 & 0 & 0 & 0 \end{pmatrix}$$

An m-th retrieval image $g_m$ is expressed by the following (Equation 14).

[Equation 14]

$$g_m = \begin{pmatrix} 0 & 0 & 0 & 0 \\ 0 & c_m & 0 & 0 \\ 0 & a_m & b_m & 0 \\ 0 & 0 & 0 & 0 \end{pmatrix}$$

where $a_0$, $b_0$, and $c_0$ are positive real numbers. Herein, by Fourier transforming (Equation 14), the following (Equation 15) is derived.

[Equation 15]

$$G_m = \begin{pmatrix} (a_m - c_m) + ib_m & a_m + b_m - c_m & (a_m - c_m) - ib_m & a_m - b_m - c_m \\ a_m + i(b_m - c_m) & (a_m + b_m) - ic_m & a_m - i(b_m + c_m) & (a_m - b_m) - ic_m \\ (a_m + c_m) + ib_m & a_m + b_m + c_m & (a_m + c_m) - ib_m & a_m - b_m + c_m \\ a_m + i(b_m + c_m) & (a_m + b_m) + ic_m & a_m - i(b_m - c_m) & (a_m + b_m) + ic_m \end{pmatrix}$$

In the case of the image with $2 \times 2$ support, the combination of phases having the highest frequency components (phase of $(a_m - b_m - c_m)$, phase of $(a_m + b_m - c_m)$, and phase of $(a_m - b_m + c_m)$) is one of total four $(0, 0, 0)$, $(\Pi, 0, \Pi)$, $(\Pi, \Pi, 0)$, and $(\Pi, 0, 0)$. Herein, the highest frequency component is a frequency where the Fourier coefficient obtained by Fourier transforming (Equation 14) becomes a real number--that is, a frequency where the Fourier coefficient becomes a real number in (Equation 15). As mentioned above, in order to converge the reconstructed image to the original image by the ER algorithm, the ER algorithm needs to start from the initial image matching the phases of the high frequency components of the original image. Then, assume that all the combinations of the above-mentioned four phases are a search space, and each individual design the genetic algorithm that expresses one of those combinations. The individual is evaluated with the Fourier error of the reconstructed image obtained when the initial image matching the phase expressed by the individual is subjected to the ER algorithm. By performing such processing of the genetic algorithm, the individual having a minimum Fourier error is obtained by the search, and the reconstructed image becomes very good, that is, a true image.

In the case of a large object as a target of this technique, as shown in FIG. 38, a Fourier amplitude F (u', v') | (u'=1, .., P' , v'=1, .., Q') obtained by performing lowpass filtering processing of Fourier amplitude | F (u, v)| (u=1, .., P, v=1, .., Q) of the obtained original image before using the genetic algorithm is calculated. Next, the image is reconstructed by the genetic algorithm shown in FIG. 38 using the calculated Fourier amplitude F(u', v'). The reconstructed image becomes a reduced image with a size of P'=P/$L_1$ and Q'=Q/L. That is, if the obtained reduced image is correctly converged, the reduced image matches a reduced image (image with size of P/$L_1$ pixels $\times$ Q/$L_2$ pixels) obtained by performing the lowpass filtering processing of the true image (image with a size of P pixels x Q pixels) and thereafter down-sampling the processed image. From the reduced image obtained by down-sampling of the image, the details of a contour line of the image before the reduction are not given and, however, provides effective information to obtain a rough shape.

Then, according to this embodiment, | F (u' , v') | (u'=1, .., P', v'=1, .., Q') is obtained from |F(u, v)| (u=1, .., P, v=1, .., Q), thereby calculating an optimum value of the combination of the phases of the area having the Fourier amplitude at a high speed with high accuracy. Further, with the optimum value, the shape of the contour line of the true image can be roughly obtained. Further, an initial value of the Snakes is set based on the obtained rough shape, thereby realizing the precise image reconstruction. As a consequence, the convergence speed can be increased and this can be applied to a large object (that is, object having a complicated grayscale value in the reconstructed image).

As specific processing for obtaining |F (u' , v')| (u'=1, .., P', v'=1, .., Q') from |F(u, v)| (u=1, .., P, v=1, .., Q), the Fourier amplitude |F(u, v)| (u=1, .., P, v=1, .., Q) of the original image is subjected to the lowpass filtering processing, thereby obtaining the Fourier amplitude |F(u', v')| (u'=1, .., P', v'=1, .., Q'). Herein, P and Q are positive integers, and P' and Q' satisfy P' <P and Q' <Q. Normally, integers such $L_1$ and $L_2$ are used that make P' =P/$L_1$ and Q'=Q/$L_2$ integers. In this case, the lowpass filtering processing is performed, thereby obtaining a low frequency area of the Fourier amplitude. The size is reduced from the true size (herein, longitudinal size 1/$L_1$ and lateral size 1/$L_2$).

In this way, the size is reduced. Thus, the size of the Fourier amplitude to be searched by the genetic algorithm can be reduced and the search can be easily performed. That is, the search is easier in the case of obtaining the optimum value of |F (u', v')| (u'=1, .., P', v'=1, .., Q'), as compared with the case of obtaining the optimum value of |F (u, v) | (u=1, .., P, v=1, .., Q). The number of elements is reduced, and the total number of combinations decreases.

Herein, the advantage of this method (phase retrieval method using the genetic algorithm) is shown using the actual image.

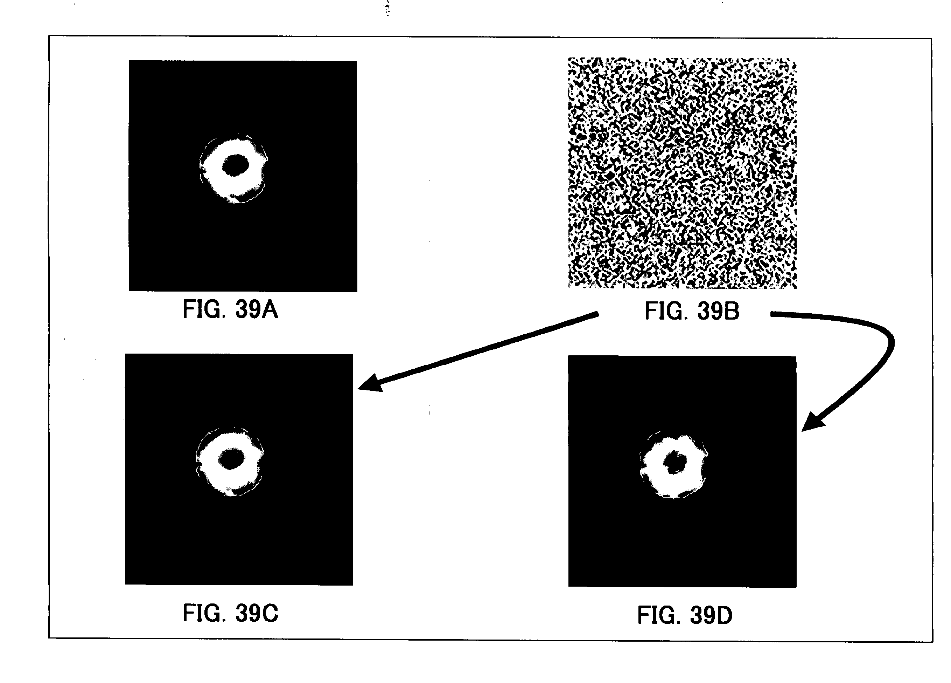

FIG. 39A is a diagram showing the original image, FIG. 39B is a diagram showing the initial image, FIG. 39C is a diagram showing the reconstructed image obtained from the initial image in FIG. 39B with the conventional Iterative Fourier method, and FIG. 39D is a diagram showing the reconstructed image obtained from the initial image in FIG. 39B according to this technique. According to the conventional iterative Fourier method, as shown in FIG. 39C, the reconstructed image does not converge to the original image (FIG. 39A). However, according to this technique, as shown in FIG. 39D, the reconstructed image is converged to the original image (FIG. 39A).

In this way, according to this embodiment, the initial image matches the combination of the phase of a specific frequency of the original image from possible combinations by the genetic algorithm. Therefore, the reconstructed image can be always converged to the original image. In particular, when the Fourier amplitude and the support are accurately known, the image can be retrieved with high accuracy without the problems on the stagnation.

Further, before applying the genetic algorithm, the Fourier amplitude is subjected to the lowpass filtering processing and the number of elements of the Fourier amplitude is reduced. That is, the image is down-sampled and the image size is reduced. Therefore, the correct image is obtained for a short calculating time, and the same advantages are obtained in the case of a large image.

With this embodiment, although the genetic algorithm is used as the optimization method, this is by no means limiting. For example, other than the Genetic algorithm (GA) serving as a global search, SA (Simulated Annealing) or Trellis Search serving as a local search (neighborhood search or partial search) can be used. Further, a combination of GA and SA is possible.

In addition, it is possible to use the techniques according to the embodiments together. That is, the technique according to the first embodiment relates to a solution when the support is not accurately known. The technique according to the second embodiment relates to a reconstruction method that is obtained by improving the problem of the ER algorithm (even if the Fourier amplitude and the support are known with high accuracy, an image cannot be converged to a correct solution). According to the necessity, these technique can be used together.

Specifically, according to the reconstructing method of the first embodiment, the ER algorithm is used based on assuming that the image is converged to a correct solution when the Fourier amplitude and the support are accurately known. However, by the ER algorithm, even if the Fourier amplitude and the support are accurately known, a case in which the image is not converged to a corrected solution is caused. Therefore, the part of the ER algorithm serving as the method of the first embodiment can be replaced with the reconstructing method of the second embodiment. By this means, a more precise reconstructing method can be realized.

For example, if both the techniques according to the first and second embodiments are used together, a part reconstructing the image according to the technique of the first embodiment is replaced from the ER algorithm to the reconstructing method of the second embodiment. Specifically, the part of the ER algorithm in step S1900 in FIG. 28 is replaced with the reconstructing method of the second embodiment.

Further, the techniques may not used together.

For example, the technique according to the second embodiment is used when the Fourier amplitude and the support are accurately known. However, the measurement support is actually displaced from the true support . This is solved by using the technique of the first embodiment.

Further, the technique of the first embodiment is used when the support to be measured is not accurately known. Generally, the support to be measured is displaced from the true support. Therefore, this technique is used, thereby reconstructing the image to a correct image. However, upon reconstructing the image, the ER algorithm is used and the image cannot thus be converged to the correct image. This is solved by using the technique according to the second embodiment in place of the ER algorithm.

(Third embodiment)

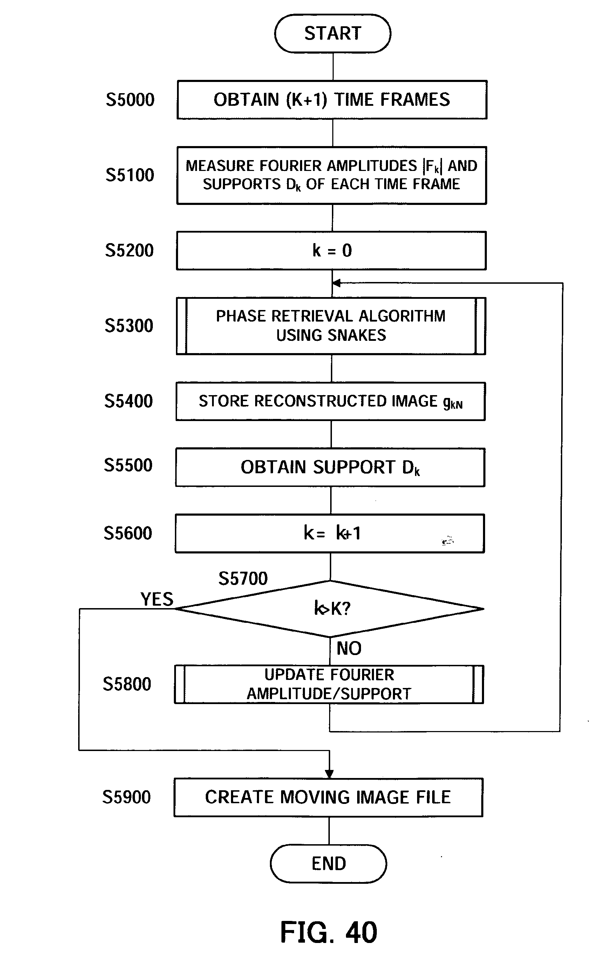

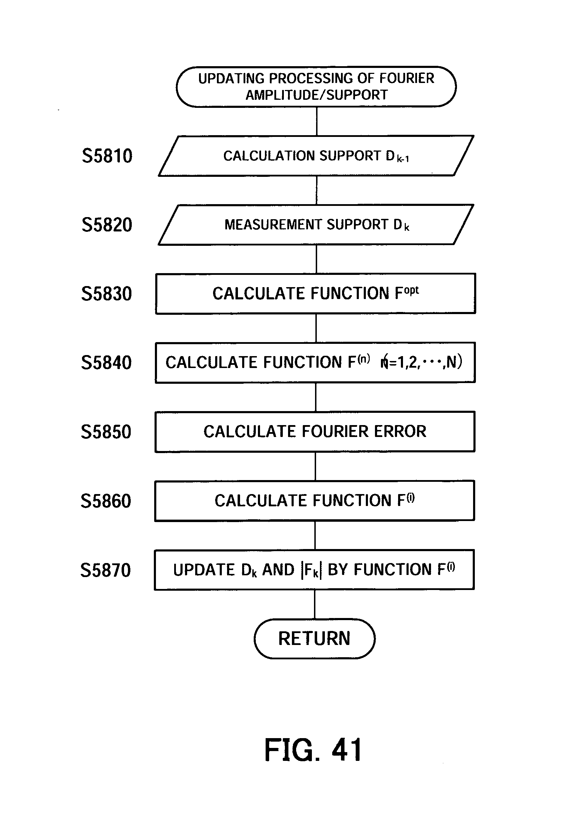

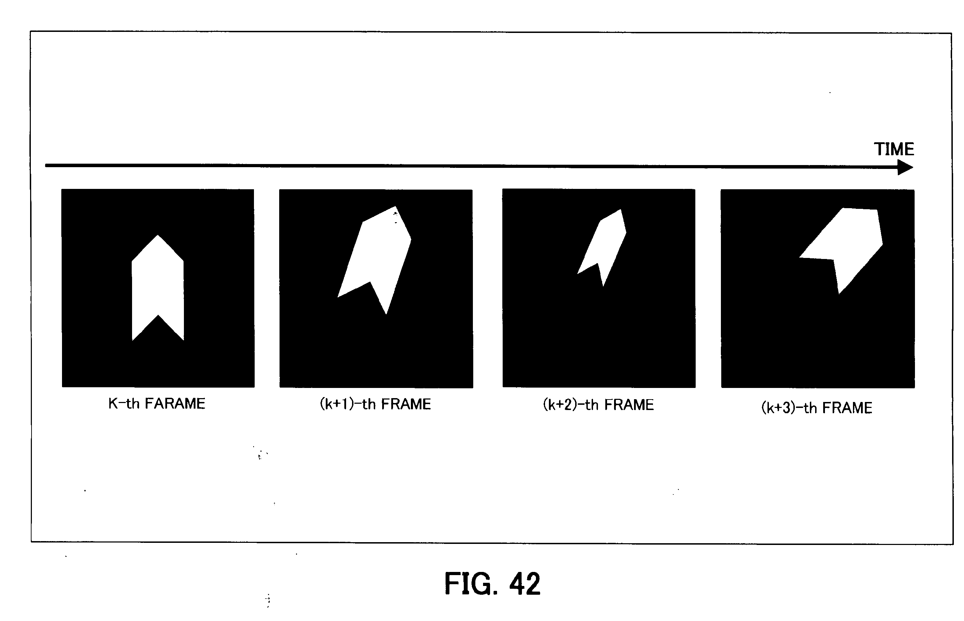

A third embodiment will be described with reference to a case where the present invention is applied to a moving image.
According to the first and second embodiments, it is assumed that the still image is reconstructed. In particular, the image reconstruction method (phase retrieval method using the Snakes) according to the first embodiment cannot be simply used for the moving image.
The reasons are as follows.
According to the method according to the first embodiment shown in FIG. 28, the image is reconstructed using the measured Fourier amplitude and the support (contour information of the original image as detailed information). In other words, the detailed information in the original image is retrieved from the Fourier amplitude and the contour information of the original image. Therefore, if the degree of expansion is too large, the shape of the outermost contour changes, and an error of the detailed information increases, and, as a result, image reconstruction may fail. That is, when the support of the initial setting does not include the true support, the detailed information of the original image is lacked and the image does not converge to the true support, and, as a result, image reconstruction may fail. When the support of the initial setting is square, the detailed information of the original image is excessively lacked. Further, an unnecessary area is large. Thus, the image reconstruction may fail.
In this regard, an image pickup target is moved in the moving image. Thus, the measured support (or support of the initial setting) cannot include the true support. In this case, as mentioned above, the detailed information of the original image is lacked. The reconstruction of the moving image partly fails, and the retrieval accuracy of the moving image can be reduced.
In order to apply the technique according to the first embodiment used for the still image to the moving image, the present inventors finds that the motion in the moving images of a plurality of time frames (expressed by a function, as will be described later) needs to be introduced to the technique according to the first embodiment. Further, in order to accomplish the foregoing, the present inventors have found that the Fourier amplitude and the support of the next time frame need to be updated using the support of the reconstructed image with high accuracy obtained by one time frame.
According to the present invention, among a plurality of time frames forming the moving image, a motion function (function expressing the motion) from the Fourier amplitude and the support of each time frame is derived, the Fourier amplitude and the support of each time frame are updated with the derived motion function, the updated Fourier amplitude and the support of each time frame are applied to the technique according to the first embodiment, and the reconstructed image of each time frame is derived, thereby reconstructing the moving image.
Hereinafter, the Fourier amplitude and the support obtained by measurement will be referred to as "measured Fourier amplitude" and "measured support," the Fourier amplitude and the support obtained by updating will be referred to as "updated Fourier amplitude" and "updated support", and the support obtained from the reconstructed image will be referred to as "calculated support."
FIG. 40 is a flowchart showing a sequence of an algorithm of an image reconstruction method according to the third embodiment. FIG. 41 is a flowchart showing contents of updating processing of the Fourier amplitude/support shown in FIG. 40.
First, in step S5000, (K+1) time frames forming a moving image are obtained. Herein, K denotes a predetermined integer, and the interval between time frames is properly preset.
For example, when an image-pickuped object having a motion (cell or crystal) is captured and is observed, in the capturing operation, the image-pickedup object is repeatedly moved (parallel movement and rotation) and is deformed (expanded/contracted and changed in partial shape). FIG. 42 shows the motions including the parallel movement, rotation, enlargement, and reduction. An example in FIG. 42 shows four arbitrary continuous time frames k, (k+1), (k+2), and (k+3).
In step S5100, Fourier amplitudes $| F_0 (u, v) |$ to $| F_K (u, v) |$ and supports $D_0$ to $D_K$ of each time frame obtained in step S5000 are measured. As mentioned below, using the measured support, a function expressing the motion information (parallel movement, rotation, enlargement, and reduction) from one support to a next support is obtained. Hereinbelow, for the purpose of convenience, the Fourier amplitude and the support of a k (k=0, 1, .. , K)-th time frame (hereinafter, referred to as a "k-th frame ") are expressed as $|F_k|$ and $D_k$.
In step S5200, the value on a counter k is set to 0.
In step S5300, the k-th frame is subjected to a series of processing (the phase retrieval algorithm using Snakes) shown in FIG. 28 according to the first embodiment . If k=1, 2, .., K, the measured Fourier amplitude input in step S1000 and the measured support input in step S1100 are replaced for reading with the Fourier amplitude and the support updated in step S5800 (described later).

In step S5400, the output image obtained in step S5300 (that is, an output image $g_N$ (x, y) obtained in step S2400) is stored as a reconstructed image $g_{kN}$(x, y) of the k-th frame.

In step 55500, a calculation support $D_k$ is obtained from the reconstructed image $g_{kN}$(x, y) obtained in step S5400 and is stored.

In step S5600, the counter k is incremented by one.

In step S5700, it is determined whether or not the counter k is larger than K. As a result of the determination, if k≤K (S5700: NO), the processing proceeds to step S5800. If k>K (S5700: YES), it is determined that the processing ends by the last K-th frame, and the processing proceeds to step S5900.

In step S5800, for the k-th frame (herein, k=1, 2, .., K), the Fourier amplitude and the support are subjected to updating processing. Specifically, a motion function is derived from a calculation support $D_{k-1}$ of a one-previous (k-1)-th frame and the measured support $D_k$ of the k-th frame is derived, the Fourier amplitude and the support of the k-th frame are updated based on the derived motion function, and the processing then returns to step S5300.

A specific processing sequence of this step is, for example, as shown in FIG. 41.

First, in step S5810, the calculation support $D_{k-1}$ of the (k-1)-th frame obtained and stored in step S5500 is input.

In step S5820, the measured support $D_k$ of the k-th frame measured in step S5100 is input.

Two processing in steps S5810 and S5820 may be inverted.

In step S5830, a function $F^{OPT}$ is calculated as a function indicating the motion from the support $D_{k-1}$ to support $D_k$.

Herein, a motion function F used in this embodiment is defined. The motion function F from the support $D_{k-1}$ to the support $D_k$ is defined by $D_k=F(D_{k-1})$. It is assumed that the support of the (k-1)-th frame and the support of the k-th frame are $D_{k-1}$(X, Y) and $D_k$(x, y), respectively. With parameters including a parallel movement (e.g., $x_0$ and $y_0$), a rotation (e.g., θ), and enlargement/reduction (e.g., a, e), this relationship can be expressed by the following (Equation 16).

[Equation 16]

$$\begin{bmatrix} X & Y & \omega \end{bmatrix} = \begin{bmatrix} x & y & 1 \end{bmatrix} \begin{pmatrix} 1 & 0 & 0 \\ 0 & 1 & 0 \\ -x_0 & -y_0 & 1 \end{pmatrix} \begin{pmatrix} \cos\theta & -\sin\theta & 0 \\ \sin\theta & \cos\theta & 0 \\ 0 & 0 & 1 \end{pmatrix} \begin{pmatrix} a & 0 & 0 \\ 0 & e & 0 \\ x_0 & y_0 & 1 \end{pmatrix}$$

That is, the function F denotes an affine transform of the parallel movement, rotation, and enlargement/reduction.

For example, as shown in FIG. 43, with respect to two continuous time frames, FIG. 43A shows a motion with $(-x_0, -y_0)$ from a dotted square to a solid square, FIG. 43B shows a θ rotation, FIG. 43C shows a-time enlargement and e-time reductions, and FIG. 43D shows a motion with $(x_0, y_0)$.

The motion function F is expressed as a 3×3 matrix in (Equation 16). Further, as shown by the following (Equation 17), the motion function F can be expressed as a 2x2 matrix.

[Equation 17]

$$\begin{bmatrix} X & Y \end{bmatrix} = \begin{bmatrix} x + x_0 & y + y_0 \end{bmatrix} \begin{bmatrix} \cos\theta & -\sin\theta \\ \sin\theta & \cos\theta \end{bmatrix} \begin{bmatrix} a & 0 \\ 0 & e \end{bmatrix}$$

Further, it is possible to approximately obtain, from preliminary knowledge, parameter ranges of these motion functions F, that is, movement of the image-pickup object (parallel movement and rotation) and the degree of deformation (expansion/contraction and change in partial shape) (upper limit of the amount of change). For example, ±7 pixels are expanded or contracted from the true support (FIG. 44A) (FIG. 44B shows the expansion and FIG. 44C shows the contraction). The image is rotated by 45 degrees (FIG. 45B) from the true support (FIG. 45A).

By using these motion function F, the function $F^{opt}$ is defined as follows. That is, according to this embodiment, the square of the absolute value of the difference between the measured support $D_k$ of the k-th frame and a support F $(D_{k-1})$ obtained by applying the calculation support $D_{k-1}$ of the (k-1)-th frame to the motion function F, that is, the motion function F when $|F(D_{k-1})-D_k|^2$ is minimum is defined as a function $F^{OPT}$. Herein, $D_k$ denotes $D_k(x, y)$, that is, a pixel value of the measured support of the k-th frame. Further, $F(D_{k-1})$ denotes $D_{k-1}(x, y)$, that is, a pixel value after the calculation support of the (k-1)-th frame is subjected to the affine transform expressed by the function F. Therefore, $|F(D_{k-1})-D_k|^2$ is obtained by squaring the absolute value of the difference between these pixel values.

In step S5840, within ranges of the motion of the image pickuped object (parallel movement and rotation) and the degree (upper limit of the amount of change) of deformation (the expansion/contraction and change in partial shape), the parameter values of the parallel movement, rotation, and enlargement/reduction are changed. Thus, the function $F^{OPT}$ is deformed, that is, the parameter values of the parallel movement, rotation, and enlargement/reduction in the function $F^{OPT}$ are changed, thereby calculating N functions $F^{(n)}$ (n=1, 2, .., N). Herein, N is a predetermined integer and is properly preset.

In step S5850, by using the function $F^{OPT}$ obtained in S5830 and the N functions $F^{(n)}$ (n=1, 2, .., N) obtained in S5840, the corresponding measured Fourier amplitude $|F_k|$ and the measured support $D_k$ are updated and the corresponding Fourier error is calculated from the updated (N+1) sets of Fourier amplitudes and supports using (Equation 5).

Herein, the measured support $D_k$ is updated by (Equation 16) or (Equation 17). Further, the measured Fourier amplitude $|F_k|$ is updated using only the parameter θ for rotation among the motion information indicated by the function F in (Equation 16) or (Equation 17) by the following (Equation 18).

[Equation 18]

$$[X \quad Y] = [x \quad y] \begin{pmatrix} \cos\theta & -\sin\theta \\ \sin\theta & \cos\theta \end{pmatrix}$$

Herein, (u, v) denotes a Fourier amplitude $|F_k(u, v)|$ before updating, that is, a component of the Fourier amplitude measured in step S5100, and (U, V) denotes a component of a Fourier amplitude $|F_k(U, V)|$ after updating. In this way, the Fourier amplitude is uniquely updated in accordance with the updating of the support.

In step S5860, from the function $F^{opt}$ and (N+1) functions of the function $F^{(n)}$ (n=1, 2, .., N), a function for minimizing the Fourier error calculated in step S5850 is selected and is set as a function $F^{(i)}$.

In step S5870, the Fourier amplitude $|F_k|$ and the support $D_k$ of the k-th frame are updated by the function $F^{(i)}$ selected in step S5860.

As mentioned above, the Fourier amplitude is updated by using only the motion information about rotation, and the support is updated by using the motion information about the parallel movement, enlargement, and reduction in addition to rotation. Therefore, the Fourier amplitude is updated by a 2x2 matrix indicating information about the rotation (refer to (Equation 18)), and the support is generally updated by a 3x3 matrix indicating information of parallel movement, enlargement, and reduction in addition to rotation (refer to (Equation 16)). However, as mentioned above, the 3x3 matrix shown by (Equation 16) can be also expressed by a 2x2 matrix as shown in (Equation 17).

In this way, according to this technique, it is possible to solve the problem caused when updating the Fourier amplitude $|F_k|$ and support $D_k$ only using the function $F^{OPT}$.

That is, specifically, upon updating the measured Fourier amplitude $|Fk|$ and the measured support $D_k$ only with the function $F^{OPT}$ as mentioned above, the motion function $F^{OPT}$ for minimizing $|F(D_{k-1}-D_k)|^2$ is calculated, and the measured Fourier amplitude and the measured support of each time frame are updated with the function $F^{OPT}$, the moving image is reconstructed with the updated Fourier amplitude and support . However, the function $F^{OPT}$ is originally calculated from the measured support. When the measurement error is caused, there is a problem that the function $F^{OPT}$ is not optimum and the reconstructed image cannot be obtained with high accuracy.

Then, in order to solve this problem, according to this technique, even if the measurement error is caused in the support, the optimum function $F^{(i)}$ is calculated, thereby realizing the reconstruction of the precise moving image.

Herein, a specific description will be given using an actual image.

FIG. 46A shows a support $(D_x=F^{OPT}(D_{k-1}))$ updated by the function $F^{OPT}$ when the function $F^{OPT}$ is not optimum. FIG. 46B shows the transition of the Fourier error of the reconstructed image obtained by using the support in FIG. 46A and employing the method according to the first embodiment. FIG. 47A shows a support $(D_k=F_1(D_{k-1}))$ updated by a selected optimum function $F^{(i)}$ (expressed as a function $F_1$) other than the function $F^{OPT}$ among (N+1) functions of the function $F^{(n)}$ (n=1, 2, .., N) and the function $F^{OPT}$, and FIG. 47B shows the transition of the Fourier error of the reconstructed image obtained by using the support in FIG. 47A and employing the method of the first embodiment. FIG. 48A shows

the support ($D_k = F_2 (D_{k-1})$) updated by one function (expressed as a function $F_2$) other than the function $F^{opt}$ or the optimum function $F^{(i)}$ among (N+1) functions including the function $F^{opt}$ and the function $F^{(n)}$ (n=1, 2, .., N). FIG. 48B shows the transition of the Fourier error of the reconstructed image obtained by using the support in FIG. 48A and employing the method of the first embodiment. FIG. 49A shows the support as the measurement result, and FIG. 49B shows the transition of the Fourier error of the reconstructed image obtained by using the support in FIG. 49A and employing the method of the first embodiment. Herein the functions $F_1$ and $F_2$ are analogized from the shape of the measured support, that is, are analogized from the range of the motion of the image pickuped object (parallel movement and rotation) and of the degree of the deformation (expansion/contraction and the change in partial shape).

In examples shown in FIG. 46 to 49, since a measurement error is caused in the support, not the function $F^{OPT}$ but the function $F_1$ is optimum. Obviously, the Fourier error of the reconstructed image obtained with the support updated by the function $F_1$ is the smallest and best.

In this way, according to this technique, even when the optimum $F^{OPT}$ is not found because the measurement error is caused in the support, the optimum function $F_1$ can be calculated to update the measured Fourier amplitude and the measured support.

Finally, in step S5900 shown in FIG. 40, a moving image file is created from the reconstructed images $g_{0N}(x, y)$ to $g_{KN}(x, y)$ of the each frame sequentially stored in step S5400, and the series of processing ends.

To summarize, with this technique, first, the reconstructed image go (FIG. 50C) of the 0-th frame is obtained by employing the method (phase retrieval method using the Snakes) of the first embodiment shown in FIG. 28 to a measured Fourier amplitude $|F_0|$ (FIG. 50A) of the 0-th frame and the measured support $D_0$ (FIG. 50B) The calculation support $D_0$ is obtained from the obtained reconstructed image $g_0$. By using the calculation support $D_0$ of the 0-th frame and the measured support $D_1$ of the first frame, the motion function $F^{OPT}$ having the minimum $|F(D_0)-D_1|^2$ is obtained. The function $F^{OPT}$ is deformed by changing the parameter values of parallel movement, rotation, and enlargement/ reduction, thereby obtaining N functions $F^{(n)}$ (n=1, 2, .. , N). From the obtained function $F^{OPT}$ and (N+1) functions of the function $F^{(n)}$ (n=1, 2, .., N), the optimum function $F^{(i)}$ having the minimum Fourier error is selected and the selected function $F^{(i)}$ updates the measured Fourier amplitude $|F_1|$ of the first frame and the measured support $D_1$. Further, with the updated Fourier amplitude $|F_1|$ and the support $D_1$, the reconstructed image $g_1$ of the first frame, and the calculated support $D_1$ is obtained from the obtained reconstructed image $g_1$. In the following, similarly, with respect to all frames from the second frame to the k-th frame, with the calculation support $D_{k-1}$ of the (k-1)-th frame and the calculation support $D_k$ of the k-th frame (herein, k=2, 3, .., K), the optimum function $F^{(i)}$ is selected. The measured Fourier amplitude $|F_k|$ (FIG. 51A) of the k-th frame and the measured support $D_k$ (FIG. 51B) are updated with the selected function $F^{(i)}$. With the updated Fourier amplitude $|F_k|$ and the support $D_k$, the reconstructed image $g_k$ (FIG. 51C) of the k-th frame is obtained. From the obtained reconstructed image $g_k$, the calculation support $D_k$ is obtained. In this way, sequentially, the measured Fourier amplitudes $|F_1|$ to $|F_k|$ and the measured supports $D_1$ to $D_k$ are updated. The moving image is reconstructed by deriving the reconstructed image of the each time frame with the updated Fourier amplitudes $|F_1|$ to $|F_K|$ and support $D_1$ to $D_K$ of the each time frame shown in FIG. 28.

Herein, a description is given again of reasons why the image reconstruction method (phase retrieval method) according to the first embodiment is not simply used to the moving image with reference to the drawings.

As mentioned above, an observation error of the support in the expansion/contraction of a general image pickuped object is ±7 pixels relative to the true support. An observation error of the support in the rotation is 45 degrees relative to the true support.

FIG. 52A shows the initial support obtained by performing the expansion processing on the measured support in FIG. 44C using a filter window 9×9 (when the measured support is contracted by (-7 pixels) from the true support). FIG. 52B shows the reconstructed image obtained by using the support in FIG. 52A and employing the method of the first embodiment. FIG. 53A shows the initial support obtained by performing the expansion processing of the measured support in FIG. 44C using a filter window 11x11. FIG. 53B shows the reconstructed image obtained by using the support in FIG. 53A and employing the method of the first embodiment. FIG. 54A shows the initial support obtained by performing the expansion processing on the measured support in FIG. 44C using a filter window 13x13. FIG. 54B shows the reconstructed image obtained by using the support in FIG. 54A and employing the method of the first embodiment. FIG. 55A shows the initial support obtained by performing the expansion processing of the measured support in FIG. 44C with a filter window 17x17. FIG. 55B shows the reconstructed image obtained by using the support in FIG. 55A and employing the method of the first embodiment. FIG. 56A shows the initial support obtained by performing the expansion processing of the measured support in FIG. 44C with a filter window 25x25. FIG.56B shows the reconstructed image obtained by using the support in FIG. 56A and employing the method of the first embodiment. FIG. 57A shows the initial support obtained by performing the expansion processing of the measured support in FIG. 44C with a filter window 31x31. FIG. 57B shows the reconstructed image obtained by using the support in FIG. 57A and employing the method of the first embodiment. FIG. 58A shows the initial support obtained by the expansion processing of the measured support in FIG. 44C using a filter window 33×33. FIG. 58B shows the reconstructed image obtained by using the support in FIG. 58A and employing the method of the first embodiment.

When the degree of expansion is from the filter window 9x9 to the filter window 31×31 as shown in FIG. 52 to 57, it is understood that the reconstructed image is converged to a correct image. On the other hand, when the degree of expansion is the filter window 33x33 as shown in FIG. 58, it is understood that the image reconstruction does not fail. This failure of the image reconstruction is caused by lack of detailed information by the expansion.

That is, according to the method of the first embodiment, as mentioned above, the image is reconstructed with the Fourier amplitude and the support (contour information of the original image serving as the detailed information). Specifically, the detailed information in the original image is retrieved from the contour information of the Fourier amplitude and the original image. Thus, if the degree of expansion is excessively large, the shape of the outermost contour changes and an error of the detailed information become large. The image reconstruction fails.

However, according to the method of the third embodiment, the image is reconstructed with the support updated from the reconstructed image of the previous frame with high accuracy. The failure of the image reconstruction due to the lack of the detailed information caused by the expansion can be avoided.

In this way, according to this embodiment, even when the image pickedup object is moved or deformed, the moving image can be reconstructed with high accuracy.

The present application is based on Japanese Patent Application No. 2004-154006, filedonMay24, 2004, the entire content of which is expressly incorporated by reference herein.

Industrial Applicability

The image reconstruction method according to the present invention is advantageous as an image reconstruction method, by which the image can retrieved with high accuracy by the phase retrieval algorithm even if the true support is not accurately known. Further, the image reconstruction method according to the present invention is advantageous as an image reconstruction method using the phase retrieval algorithm, in which the image can be retrieved with high accuracy without causing the problem on the stagnation even when the Fourier amplitude and the support are accurately known even in the case of the large image.

Furthermore, even when the image pickup object is moved or deformed, the image reconstruction method according to the present invention is advantageous as an image reconstruction method for reconstructing a moving image with high accuracy.

**Claims**

1. An image reconstruction method comprising the steps of:

    inputting a Fourier amplitude of an original image;
    inputting a support occupied by the original image;
    performing expansion processing on the input support; and
    reconstructing an image by updating a support condition utilizing a phase retrieval algorithm and an object extracting algorithm comprising a function of contracting the support together, using the input Fourier amplitude and the support subjected to the expansion processing.

2. The image reconstruction method according to claim 1, wherein:

    the phase retrieval algorithm comprises an error reduction algorithm (ER); and
    the object extracting algorithm comprises a Snakes algorithm (Snakes).

3. The image reconstruction method according to claim 1, wherein the support condition is updated by applying the object extracting algorithm to an output image obtained by iterating the phase retrieval algorithm once or a plurality of times and extracting an image and making the extracted image a new support condition.

4. The image reconstruction method according to claim 1, wherein the phase retrieval algorithm and the object extracting algorithm are applied in a predetermined order.

5. An image reconstruction method according to claim 4, wherein a first algorithm applied after the expansion processing is the object extracting algorithm.

6. An image reconstruction method according to claim 4, wherein an algorithm used at an end time is the phase retrieval algorithm.

7. An image reconstructing program making a computer execute the steps of:

inputting a Fourier amplitude of an original image;
inputting a support occupied by the original image;
performing expansion processing on the input support; and
reconstructing an image by updating a support condition utilizing a phase retrieval algorithm and an object extracting algorithm comprising a function of contracting the support together, using the input Fourier amplitude and the support area subjected to the expansion processing.

8. An image reconstruction method comprising the steps of:

searching for an initial image in which a combination of phases of a domain formed with specific frequencies matches with an original image using an optimization algorithm; and
reconstructing an image by a phase retrieval algorithm using the searched initial image.

9. The image reconstruction method according to claim 8, wherein:

the optimization algorithm comprises a genetic algorithm (GA); and
the phase retrieval algorithm comprises an error reduction algorithm (ER).

10. An image reconstruction method according to claim 8, further comprising the step of performing lowpass filtering processing on the input Fourier amplitude before the search step and reducing the number of components of the Fourier amplitude.

11. An image reconstruction program making a computer execute the steps of:

searching for an initial image in which a combination of phases of a domain formed with specific frequencies matches with an original image using an optimization algorithm; and
reconstructing an image by a phase retrieval algorithm using the searched initial image.

12. An image reconstruction method comprising the steps of:

inputting a moving image formed with a plurality of time frames;
calculating motion information between two consecutive time frames with respect to the plurality of the time frames;
updating a Fourier amplitude and a support of each time frame using the motion information corresponding to the calculated each time frame; and
deriving a reconstructed image of the each time frame by applying the updated Fourier amplitude and support for the each time frame to the image reconstruction method of claim 1 as input data, respectively.

13. The image reconstruction method according to claim 12, wherein:

the motion information is expressed by a motion function F which expresses parallel movement, rotation, expansion and reduction in a matrix form; and
the motion information corresponding to the each time frame is calculated as a motion function $F^{OPT}$ obtained when a square of an absolute value of a difference between a support $F(D_{k-1})$ obtained by applying a support $D_{k-1}$ obtained from a reconstructed image of a (k-1)-th frame (where k=1, 2, .. K and K is an integer) to the motion function F, and a measured support $D_k$ of a k-th frame becomes minimum.

14. The image reconstruction method according to claim 12, wherein:

the motion information is expressed by a motion function F which expresses parallel movement, rotation, expansion and reduction in a matrix form; and
the calculation of the motion information corresponding to the each time frame comprises the steps of:

calculating a motion function $F^{OPT}$ obtained when a square of an absolute value of a difference between a support $F(D_{k-1})$ obtained by applying a support $D_{k-1}$ obtained from a reconstructed image of a (k-1)-th frame (where k=1, 2, .. K and K is an integer) to the motion function F, and a measured support $D_k$ of a k-

th frame becomes minimum;

calculating a function $F^{(n)}$ (where n=1, 2, N, and N is an integer) obtained by changing values of parameters for parallel movement, rotation, enlargement, and reduction for the calculated function $F^{OPT}$ ; and

selecting a function $F^{(i)}$ that minimizes a Fourier error from the calculated function $F^{OPT}$ and (N+1) functions for the functions $F^{(n)}$.

**15.** An image reconstructing program making a computer execute the steps of:

inputting a moving image formed with a plurality of time frames;

calculating motion information between two consecutive time frames with respect to the plurality of the time frames;

updating a Fourier amplitude and a support of each time frame using the motion information corresponding to the calculated each time frame; and

deriving a reconstructed image of the each time frame by applying the updated Fourier amplitude and support for the each time frame to the image reconstruction method of claim 1 as input data, respectively.

FIG. 1

FIG. 2

FIG. 3

FIG. 4

FIG. 5

FIG. 6

FIG. 7A

FIG. 7B

FIG. 7C

FIG. 7D

FIG. 8B

FIG. 8A

FIG. 9B

FIG. 9A

FIG. 10A

FIG. 10B

EP 1 770 634 A1

## FIG. 11A

## FIG. 11B

FIG. 12A

FIG. 12B

FIG. 12C

...

FIG. 12D

FIG. 13A

FIG. 13B

FIG. 14B

FIG. 14A

FIG. 15B

FIG. 15A

FIG. 16B

FIG. 16A

FIG. 17

FIG. 18A

FIG. 18B

FIG. 19B

FIG. 19A

FIG. 20A

FIG. 20B

FIG. 21A

FIG. 21B

FIG. 22B

FIG. 22A

EP 1 770 634 A1

FIG. 23A

FIG. 23B

FIG. 24

FIG. 25A

FIG. 25B

EP 1 770 634 A1

FIG. 26

FIG. 27

START

S1000 — INPUT MEASUREMENT AMPLITUDE $|F(u, v)|$

S1100 — INPUT MEASUREMENT SUPPORT D

S1200 — INPUT INITIAL IMAGE $I(x, y)$

S1300 — $g_{initial}(x,y) = I(x,y)$

S1400 — EXPANSION PROCESSING ON MEASUREMENT SUPPORT D → D

S1500 — CREATE IMAGE $d(x, y)$

S1600 — $n = 1$

S1700 — APPLY SNAKES TO $d(x, y)$ → EXTRACTED OBJECT D′

S1800 — $D = D′$

S1900 — EXECUTE ER ALGORITHM M-TIMES TO $g_{initial}(x, y)$ USING $|F(u, v)|$ AND D

S2000 — $g_{initial}(x,y) = g_n(x,y)$

S2100 — $d(x,y) = g_n(x,y)$

S2200 — $n = n+1$

S2300 — $n > N?$ — NO

YES

S2400 — RECONSTRUCTED IMAGE $G_N(x, y)$

END

FIG. 28

MEASURE FOURIER AMPLITUDE
OF ORIGINAL IMAGE (S3000)

DIFFRACTION IMAGE
(FOURIER AMPLITUDE)

COHERENT
SOURCE

SAMPLE

DETECTOR

MEASURE SUPPORT (S3100)

SUPPORT

SAMPLE

DETECTOR

CREATE RECONSTRUCTED
IMAGE (S3200)

$g_0$

$g_1$

$g_2$

$g_N$

FOURIER AMPLITUDE

SUPPORT

RECONSTRUCTED IMAGE

FIG. 29

FIG. 30A

FIG. 30B

FIG. 31A

FIG. 31B

FIG. 32A

FIG. 32B

FIG. 32C

FIG. 32D

FIG. 32E

FIG. 32F

## FIG. 33A

## FIG. 33B

## FIG. 33C

## FIG. 33D

## FIG. 33E

## FIG. 33F

**FIG. 34A**

**FIG. 34B**

**FIG. 34C**

**FIG. 34D**

**FIG. 34E**

**FIG. 34F**

FIG. 35B

FIG. 35D

FIG. 35A

FIG. 35C

FIG. 36B

FIG. 36D

FIG. 36A

FIG. 36C

FIG. 37

START

S4000    DETERMINE GENETIC TYPE

S4100    CREATE INITIAL GROUP

S4200    EVALUATE INDIVIDUAL

S4300    GENETIC OPERATION
         · SELECTION
         · CROSSING
         · MUTATION EVOLUTION

S4400    SATISFY END CONDITION ?    NO

         YES

END

FIG. 38

FIG. 39B

FIG. 39D

FIG. 39A

FIG. 39C

FIG. 40

FIG. 41

S5810 — CALCULATION SUPPORT $D_{k-1}$

S5820 — MEASUREMENT SUPPORT $D_k$

S5830 — CALCULATE FUNCTION $F^{opt}$

S5840 — CALCULATE FUNCTION $F^{(n)}$ $(n=1,2,\cdots,N)$

S5850 — CALCULATE FOURIER ERROR

S5860 — CALCULATE FUNCTION $F^{(i)}$

S5870 — UPDATE $D_k$ AND $|F_k|$ BY FUNCTION $F^{(i)}$

UPDATING PROCESSING OF FOURIER AMPLITUDE/SUPPORT

RETURN

FIG. 42

FIG. 43A    FIG. 43B    FIG. 43C    FIG. 43D

FIG. 44A

FIG. 44B

FIG. 44C

FIG. 45A

FIG. 45B

FIG. 46A

FIG. 46B

ITERATION COUNT

ERROR

**FIG. 47B**

**FIG. 47A**

FIG. 48B

ITERATION COUNT

ERROR

FIG. 48A

FIG. 49B

FIG. 49A

FIG. 50A

FIG. 50B

FIG. 50C

FIG. 51A

FIG. 51B

FIG. 51C

FIG. 52A

FIG. 52B

FIG. 53A

FIG. 53B

EP 1 770 634 A1

FIG. 54B

FIG. 54A

FIG. 55B

FIG. 55A

FIG. 56A

FIG. 56B

EP 1 770 634 A1

FIG. 57B

FIG. 57A

FIG. 58A

FIG. 58B

EP 1 770 634 A1

<div align="center">INTERNATIONAL SEARCH REPORT</div>

| | International application No. |
|---|---|
| | PCT/JP2005/009230 |

**A. CLASSIFICATION OF SUBJECT MATTER**
Int.Cl$^7$ G06T1/00

According to International Patent Classification (IPC) or to both national classification and IPC

**B. FIELDS SEARCHED**

Minimum documentation searched (classification system followed by classification symbols)
Int.Cl$^7$ G06T1/00, 3/00, 5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus(JOIS)

**C. DOCUMENTS CONSIDERED TO BE RELEVANT**

| Category* | Citation of document, with indication, where appropriate, of the relevant passages | Relevant to claim No. |
|---|---|---|
| A | JP 07-085288 A (Nippon Telegraph And Telephone Corp.), 31 March, 1995 (31.03.95), Full text; all drawings (Family: none) | 1-7,12-15 |
| A | JP 11-215360 A (Minolta Co., Ltd.), 06 August, 1999 (06.08.99), Full text; all drawings & US 6567568 B1 | 1-7,12-15 |
| A | Toru TAKAHASHI, Hiroaki TANASHIRO, Katsuhiko ITO, Toshiro FUJISAKI, "Iso kaifuku ni Mochiiru Fourier Hanpukuho no Kaizen", Japanese Journal of Optics, Oyo Butsuri Gakkai Bunkakai, Nihon Kogakukai, 10 January, 2003 (10.01.03), Vol.32, No.1, pages 39 to 45 | 1-7,12-15 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August, 2005 (04.08.05) | 23 August, 2005 (23.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
| --- | --- |
| | PCT/JP2005/009230 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Isao MIZOJIRI, Homei KAMIYA, Naoto YASUGI, "Cho Onpa Gazo no Snake o Mochiita Sashin Hen'en Kenshutsu", Memoirs of the Institute of Science & Engineering, Ritsumeikan Daigaku Rikogaku Kenkyusho, 31 March, 1996 (31.03.96), Vol.54, pages 93 to 102 | 1-7,12-15 |
| A | Shin YOSHIMORI, Atsushi TERANAI, Osanao TAKASHIMA, Shigeru OMATSU, "Idenshiteki Kanwa Hanpuku Fourier Henkan Algorithm ni yoru Fourier Henkan Furehaba Ko karano Gazo Saikosei", The Transactions of the Institute of Electronics, Information and Communication Engineers D-2, The Institute of Electronics, Information and Communication Engineers, 25 August, 1999 (25.08.99), Vol.J82-D-II, No.8, pages 1290 to 1298 | 1-7,12-15 |
| A | Moriyuki MATSUO, Takahito KUNIMITSU, "Idenshiteki Hanpuku Fourier Algorithm no Gazo Fukugen heno Oyo", The Institute of Electronics, Information and Communication Engineers Gijutsu Kenkyu Hokoku (IE93-122), The Institute of Electronics, Information and Communication Engineers, 25 February, 1994 (25.02.94), Vol.93, No.483, pages 23 to 30 | 1-7,12-15 |

Form PCT/ISA/210 (continuation of second sheet) (January 2004)

## INTERNATIONAL SEARCH REPORT

| International application No. |
| --- |
| PCT/JP2005/009230 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The inventions of claim 1-7, 12-15 include a constituent feature that "using the steps of inputting the Fourier amplitude of the original image, inputting a support occupied by the original image, and subjecting the inputted support to an expansion processing , and using he inputted Fourier amplitude and the support subjected to the expansion processing, the support condition is updated by further using the phase recovery algorithm and an object extracting algorithm having a function of contracting the support, and thus an image is reconstructed", and are directed to "a technique relating to a solving measure of when the support is not accurately known".
        (Continued to extra sheet.)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-7, 12-15

**Remark on Protest**      ☐ The additional search fees were accompanied by the applicant's protest.

☐ No protest accompanied the payment of additional search fees.

Form PCT/ISA/210 (continuation of first sheet (2)) (January 2004)

**INTERNATIONAL SEARCH REPORT**

International application No.

PCT/JP2005/009230

Continuation of Box No.III of continuation of first sheet(2)

The inventions of claims 8-11 include a constituent feature, i.e., "an image reconstructing method having a step of searching, by using an optimized algorithm, for an initial image in which the combination of the phase of the area constituted with a specific frequency agrees with that of the original image and a step of reconstructing an image by a phase recovery algorithm by using the initial image searched for", and are directed to a reconstructing technique solving the problems of the ER algorithm such as a problem that even if the Fourier amplitude and the support are accurately known, convergence to the correct solution may not necessarily be achieved.

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004154006 A

### Non-patent literature cited in the description

- **R. W. GERCHBERG.** Super-resolution through error energy reduction. *Opt. Acta,* 1974, vol. 21, 709-720
- **B. J. HOENDERS.** On the solution of the phase retrieval problem. *J. Math. Phys.,* 1975, vol. 16, 1719-1725
- **R. E. BURGE ; M. A. FIDDY ; A. H. GREENAWAY ; G. ROSS.** The phase problem. *Proc. R. Soc. Lond,* 1976, vol. 350, 191-212
- **J. R. FIENUP.** Phase retrieval algorithms: a comparison. *Appl. Opt.,* 1982, vol. 21, 2758-2769
- **M. KASS ; A. WITKIN ; D. TERZOPOULOS.** Snakes: Active contour models. *Int . J. Comput. Vis.,* 1988, vol. 1, 312-331
- **TOHRU TAKAHASHI ; HIROAKI TAKAJO ; TETSUYA KUBO.** An Algorithm for Object Recovery from the Contaminated Fourier Modulus. *Optics,* 1996, vol. 25, 223-227
- **TOHRU TAKAHASHI ; HIROAKI TAKAJO ; KATSUHIKO ITOH ; TOSHIRO FUJIZAKI.** An Improvement of the Iterative Fourier-TransformMethod for Phase Retrieval. *Optics,* 2003, vol. 32, 39-45
- **HIROAKI TAKAGI ; TORU TAKAHASHI ; MASANORI TERATORI ; TADAHIRO NAGANO.** Consideration using numeral simulation of stagnation in iterative phase retrieval algorithm. *Optics,* 1992, vol. 21, 119-127